# EUROPEAN PATENT APPLICATION

(11) **EP 4 328 197 A1**
(43) Date of publication of application: **28.02.2024**
(21) Application number: 22191624.0
(22) Date of filing: 23.08.2022
(51) Int. Cl.: C03B 17/04, C03B 5/033, C03C 3/091, C03B 5/24, C03B 5/26, C03B 20/00, C03B 5/16

(54) **GLASS ROD, SET OF GLASS RODS, AND PROCESS FOR THE PRODUCTION OF A GLASS ROD**

(71) Applicant: SCHOTT AG, 55122 Mainz (DE)
(72) Inventor: Heinl, Sebastian, 92708 Mantel (DE); Eichholz, Rainer Erwin, 60323 Frankfurt am Main (DE); Bäumler, Christoph, 92256 Hahnbach (DE); Lippert, Hans, 95676 Wiesau (DE); Debreczeny, Csaba, 92637 Weiden (DE); Trinks, Volker, 95666 Mitterteich (DE)
(74) Representative: Fuchs Patentanwälte Partnerschaft mbB

(57) **Abstract**

The present invention relates to glass rods, a set of glass rods, and a process for the production of a glass rod from a glass having a T4 temperature of at least 1400°C. The process comprises melting glass and withdrawing it to form a rod and adjusting temperature and/or pressure to control the glass melt withdrawal rate. Additionally, the invention relates to a flash lamp comprising the glass rod, and a use of a glass rod according to the invention for joining a metal article to a glass element and/or for a flash lamp.

## Description

The present invention relates to glass rods, a set of glass rods, and a process for the production of a glass rod. Additionally, the invention relates to a flash lamp comprising the glass rod, and a use of a glass rod according to the invention for joining a metal article to a glass element and/or for a flash lamp.

### Background

Flash lamps find a variety of uses in medical, industrial, and scientific applications.

Flash lamps are typically built from a fused silica/quartz or borosilicate tube which is designed as a U-shape, wherein the two ends are integrated with metal electrodes. High-voltage electrical power is supplied via conductive supports which also function as a mount or lamp holder during operation. Special glasses have been developed to connect the metal conductive supports of the metal electrodes to the tube wall of flash lamps.

Processes for the manufacture of flash lamps known in the art require technical supervision and human control because of process irregularities during the manufacture of flash lamps.

Robot-controlled processes for the manufacture of flash lamps are sought after, but they rely on glass rods that are suited for fully automated manufacturing processes, in order to guarantee a continuous and stable workflow.

Accordingly, there remains a need to provide glass rods for the manufacture of flash lamps in fully automated robot-controlled processes. Additionally, there is a related desire to provide a process for the manufacture of glass rods that meets the described needs and can be used for the manufacture of flash lamps in robot-controlled processes.

### Summary of the invention

In a first aspect, the invention relates to a glass rod having a length l_{rod}, an average semi-major axis length lₘₐⱼₒᵣ₍ₐ₎ and an average semi-minor axis length lₘᵢₙₒᵣ₍ₐ₎, wherein the length l_{rod} is from 100 to 1600 mm,
wherein within a cross-section of the glass rod, lₘₐⱼₒᵣ₍ₙ₎ is the distance from the centre-of-mass of the cross-section to the furthest boundary of the glass rod within said cross-section and lₘᵢₙₒᵣ₍ₙ₎ is the distance from the centre-of-mass of the cross-section to the nearest boundary of the glass rod within said cross-section, Iₘₐⱼₒᵣ₍ₙ₎ and Iₘᵢₙₒᵣ₍ₙ₎ can be the same or different,
wherein the glass rod comprises a glass composition having a T4 temperature, defined as the temperature at which the glass has a viscosity of 10⁴ dPa·s, of 1400 °C or more,
having a total relative length variation of the semi-major axis (**tlvₘₐⱼₒᵣ**), a relative local area variation (lav) and a quality index defined as the sum **tlvₘₐⱼₒᵣ + lav**,
wherein **tlvₘₐⱼₒᵣ** is determined as the absolute difference between (a) the smallest semi-major axis length of 50 equidistant cross-section positions and (b) the largest semi-major axis length of the 50 equidistant cross-section positions, normalised by the average value of the semi-major axis lengths lₘₐⱼₒᵣ₍ₐ₎ of the 50 equidistant cross-section positions,
the 50 equidistant cross-section are positioned along the length I_{rod} of the glass rod, starting at a position of 0.01*l_{rod} as a first position and employing additive increments of 0.02*l_{rod} for each subsequent position,
wherein **lav** is determined as the absolute difference between (c) the cross-sectional area at the cross-section position that has the largest semi-major axis length of the 50 equidistant cross-section positions and (d) the average value of the cross-sectional areas of the 50 equidistant cross-section positions, normalised by the average value of the cross-sectional areas of the 50 equidistant cross-section positions,
wherein the **quality index** is 0.090 or less, 0.070 or less, or 0.050 or less.

The glass rods according to the invention comprise a glass composition having a T4 temperature, defined as the temperature at which the glass has a viscosity of 10⁴ dPa·s, of 1400 °C or more, and are thus suited for the manufacture of flash lamps which experience high temperatures and undergo a multitude of extreme temperature changes during their lifecycle.

Glass rods known in the art often display inhomogeneous geometries which, among other influences, are thought to originate from small batches of glass (raw) materials used for manufacturing, short dwelling times in non-continuous processes and high melting temperatures of the employed glass compositions. The observed inhomogeneous geometries result from inhomogeneities in the glass melt during production which also manifests itself in the final glass rod product. Inhomogeneities in the glass melt also cause and are directly associated with inhomogeneities in the glass melt viscosity. Too large deviations from the "perfect geometry" poses problems in the subsequent manufacturing processes, including robot handling.

Naturally, a mathematically perfect cylinder shape of a technically produced glass rod may remain elusive. The invention provides a glass rod which meet the desire and requirement towards uniformity. The uniformity may be assessed and distinguished via a quality index which has been defined as the sum of the total relative length variation of the semi-major axis (**tlvₘₐⱼₒᵣ**) and relative local area variation **(lav).** Both parameters, **tlvₘₐⱼₒᵣ** and **lav,** reflect the fidelity of the glass rod geometry.

The glass rods according to the invention are particularly uniform with respect to the total relative length variation of the semi-major axis, measured on 50 equidistant cross-section which are positioned along the length l_{rod} of the glass rod, and, at the same time, have a fairly constant mass over the entire glass rod length which is expressed by only very small area variations of the measured 50 equidistant cross-sections.

The total relative length variation of the semi-major axis (**tlvₘₐⱼₒᵣ**) is assessed with respect to the largest and smallest value of the 50 equidistant cross-section, i.e. the difference, which is then divided by the average value of the semi-major axis lengths of the 50 equidistant cross-section positions. At the (cross-section) position of the largest semi-major axis, the relative local area variation (lav) is determined as the absolute difference between (c) the cross-sectional area at the cross-section position that has the largest semi-major axis length of the 50 equidistant cross-section positions and (d) the average value of the cross-sectional areas of the 50 equidistant cross-section positions, and normalised by the average value of the cross-sectional areas of the 50 equidistant cross-section positions.

The inventors have established that a quality index of 0.090 or less meets the required standards of the glass rods for flash lamps and reflects improved uniformity over glass rods known in the art. The quality index of 0.090 or less of the provided glass rods provides for a good robot handling and thus enables fully automated manufacturing of flash lamps. A low value for the quality index indicates a desirable uniformity of the glass rod, because the total relative length variation of the semi-major axis (**tlvₘₐⱼₒᵣ**) has to be accordingly low. A low **tlvₘₐⱼₒᵣ** value thereby provides for smooth robot handling, particularly before melting the glass rod and subsequent manufacturing into a flash lamp. A low value for the quality index also indicates and provides for a low relative local area variation **(lav)** which is determined at the cross-section position that has the largest semi-major axis length of the 50 equidistant cross-section positions. A low value for the relative local area variation **(lav)** established a good fuse between the joined glass and metal electrodes.

The uniformity of the glass rod allows smooth mechanical robot handling because unevenness and irregularities in thickness are minimised to the extent that there is no stalling of the glass rod in the robot. Additionally, during the manufacture of the flash lamp, the glass rod needs to be heated. A uniform glass rod which only has a small relative local area variation lav can be heated homogeneously and constantly to a desired narrow temperature range. The manufacturing temperatures of flash lamps are high, because the employed glass compositions are required to melt only at high temperatures, expressed in the property that the T4 temperature is 1400 °C or more. The glass rods according to the invention experience less temperature deviations during the manufacturing steps due to their high uniformity with respect to the cross-sectional area and the constancy of mass along the length of the glass rod. Advantageously, this provides for reduced glass fracture during manufacturing itself but also in the final product.

In a second aspect, the invention relates to a set of glass rods. Advantageously, the uniformity of the glass rods according to the invention is expressed in the individual glass rods provided, but also reflected at a bulk level comprising at least 40 glass rods in a set.

In a third aspect, the invention relates to a process for the production of a glass rod, comprising the steps
- providing a reactor (1) comprising a lower drain opening (2);
- heating glass raw material in the reactor to obtain a glass melt (3);
- heating the glass melt at least partially to a temperature T2.5, defined as the temperature at which the glass melt has a viscosity of 10^{2,5} dPa·s;
- withdrawing the glass melt from the reactor at a withdrawal temperature and at a glass melt withdrawal rate; and
- increasing the withdrawal temperature in order to control the glass melt withdrawal rate, and/or adjusting a pressure above the glass melt to control the glass melt withdrawal rate;
- cooling and/or forming the glass melt to obtain a glass rod (5) and/or obtaining the glass rod (5) according to this disclosure,
wherein the glass melt has a glass composition with a T4 temperature of 1400 °C or more, wherein T4 is the temperature at which the glass melt composition has a viscosity of 10⁴ dPa·s.

Processes for the manufacture of glass compositions with high melting temperatures, e.g. characterised by a T4 temperature of 1400 °C or more, and related products are technically very challenging, in particular when narrow temperature ranges and tight control of flow rates is required at the high manufacturing temperatures. The inventors have thus established conditions that allow controlling glass melt withdrawal from the reactor. Increasing the withdrawal temperature in order to control the glass melt withdrawal rate, and/or adjusting a pressure above the glass melt to control the glass melt withdrawal rate provides two respective means which may be used independently or in combination. Both these means are delicate and require tight process monitoring and control in order to control the glass melt withdrawal rate, and specifically to provide a withdrawal rate within pre-set narrow ranges. Advantageously, the process allows the manufacture of glass rods according to this disclosure.

Optionally, the process provides a glass rod or a set of glass rods according to this disclosure.

The inventors have thus established manufacturing conditions for the production of a glass rod which is highly uniform, e.g. with respect to a minimised total relative length variation of the semi-major axis (**tlvₘₐⱼₒᵣ**) and/or a minimised relative local area variation **(lav),** thus having a desirably low value for the quality index defined as the sum of **tlvₘₐⱼₒᵣ** and lav.

The manufacturing conditions may control the glass melt withdrawal from the reactor at a rate with a tolerance of 1% or less and/or at a volume flow rate with a tolerance of 1% or less, and/or control that the glass melt is withdrawn at a withdrawal temperature of at least 50 °C above T4, with a tolerance of 10 °C, or 5 °C, or 3° C.

It is advantageous to control the glass melt withdrawal from the reactor within narrow (volume flow) rate boundaries, and to thus work at a near constant glass mass stream emanating from the reactor, in order to minimise possible deviations in the obtained glass rod. Until now, process control at this required level has technically not been feasible. The guarantee of a constant glass mass stream at the drain opening yields a glass rod with defined measures and thus a high precision. The high precision manifests itself in a minimised total relative length variation of the semi-major axis and/or a minimised relative local area variation.

It may be advantageous to control that the glass melt is withdrawn at a withdrawal temperature of at least 50 °C above T4, with a tolerance of 10 °C, or 5 °C, or 3° C, because the viscosity has to be large enough to provide for flowing conditions of the glass melt at the step of drawing the glass melt into a rod. At the same time, the temperature deviation of the glass melt at the drawing step may have to be kept small, e.g. with a tolerance of 10 °C, or 5 °C, or 3° C, in order to avoid inhomogeneities in the glass melt composition and the glass melt viscosity.

In another aspect, the invention relates to a flash lamp comprising the glass rod according to this disclosure, the flash lamp further comprising electrode (e.g. a tungsten or molybdenum electrode), and quartz glass, wherein the glass seals the quartz glass to the electrode.

In a fourth aspect, the invention relates to the use of a glass rod according to the invention for joining a metal article to a glass element and/or for a flash lamp.

In a fifth aspect, the invention relates to a glass rod having a length I_{rod}, an average semi-major axis length Iₘₐⱼₒᵣ₍ₐ₎ and an average semi-minor axis length Iₘᵢₙₒᵣ₍ₐ₎, wherein the length I_{rod} is from 100 to 1600 mm,
wherein within a cross-section of the glass rod, Iₘₐⱼₒᵣ₍ₙ₎ is the distance from the centre-of-mass of the cross-section to the furthest boundary of the glass rod within said cross-section and Iₘᵢₙₒᵣ₍ₙ₎ is the distance from the centre-of-mass of the cross-section to the nearest boundary of the glass rod within said cross-section, Iₘₐⱼₒᵣ₍ₙ₎ and Iₘᵢₙₒᵣ₍ₙ₎ can be the same or different,
wherein the glass rod comprises a glass composition having a T4 temperature, defined as the temperature at which the glass has a viscosity of 10⁴ dPa·s, of 1400 °C or more,
wherein the average semi-major axis length lₘₐⱼₒᵣ₍ₐ₎ is from 0.9 to 3.1 mm, and wherein the semi-minor axis length Iₘᵢₙₒᵣ₍ₙ₎ is from 0.9 to 3.1 mm,
wherein the semi-major axis length Iₘₐⱼₒᵣ₍ₙ₎ is within a tolerance of 10%, or 5%, or 2% relative to the average semi-major axis length lₘₐⱼₒᵣ₍ₐ₎ of the 50 equidistant cross-section positions, at each of the equidistant positions, and/or
wherein the semi-minor axis length Iₘᵢₙₒᵣ₍ₙ₎ is within a tolerance of 10%, or 5%, or 2% relative to the average semi-minor axis length of the 50 equidistant cross-section positions, at each of the equidistant positions,
wherein the 50 equidistant cross-section are positioned along the length I_{rod} of the glass rod, starting at a position of 0.01*l_{rod} as a first position and employing additive increments of 0.02*l_{rod} for each subsequent position.

In a sixth aspect, the invention relates to a glass rod having a length l_{rod}, an average semi-major axis length lₘₐⱼₒᵣ₍ₐ₎ and an average semi-minor axis length Iₘᵢₙₒᵣ₍ₐ₎, wherein the length I_{rod} is from 100 to 1600 mm,
wherein within a cross-section of the glass rod, Iₘₐⱼₒᵣ₍ₙ₎ is the distance from the centre-of-mass of the cross-section to the furthest boundary of the glass rod within said cross-section and Iₘᵢₙₒᵣ₍ₙ₎ is the distance from the centre-of-mass of the cross-section to the furthest boundary of the glass rod within said cross-section, Iₘₐⱼₒᵣ₍ₙ₎ and Iₘᵢₙₒᵣ₍ₙ₎ can be the same or different,
wherein the glass rod comprises a glass composition having a T4 temperature, defined as the temperature at which the glass has a viscosity of 10⁴ dPa·s, of 1400 °C or more,
wherein the glass rod has an average ovality defined as the average of 50 local ovalities 2*( lₘₐ₋ⱼₒᵣ₍ₙ₎ - lₘᵢₙₒᵣ₍ₙ₎)/( lₘₐⱼₒᵣ₍ₙ₎ + lₘᵢₙₒᵣ₍ₙ₎),
wherein the local ovalities are sampled at 50 equidistant positions along the glass rod, and wherein the average ovality is 0.20 or less, less than 0.10, less than 0.050, or less than 0.030, at each of the equidistant positions,
wherein the 50 equidistant cross-section are positioned along the length l_{rod} of the glass rod, starting at a position of 0.01*l_{rod} as a first position and employing additive increments of 0.02*l_{rod} for each subsequent position.

In a seventh aspect, the invention relates to a glass rod having a length l_{rod}, an average semi-major axis length lₘₐⱼₒᵣ₍ₐ₎ and an average semi-minor axis length lₘᵢₙₒᵣ₍ₐ₎, wherein the length l_{rod} is from 100 to 1600 mm,
wherein within a cross-section of the glass rod, lₘₐⱼₒᵣ₍ₙ₎ is the distance from the centre-of-mass of the cross-section to the furthest boundary of the glass rod within said cross-section and lₘᵢₙₒᵣ₍ₙ₎ is the distance from the centre-of-mass of the cross-section to the nearest boundary of the glass rod within said cross-section, lₘₐⱼₒᵣ₍ₙ₎ and lₘᵢₙₒᵣ₍ₙ₎ can be the same or different,
wherein the glass rod comprises a glass composition having a T4 temperature, defined as the temperature at which the glass has a viscosity of 10⁴ dPa·s, of 1400 °C or more,
having a **total relative length variation of the semi-minor axis (tlvₘᵢₙₒᵣ)** of less than 0.040, wherein tlvₘᵢₙₒᵣ determined as the absolute difference between the smallest semi-minor axis length and the largest semi-minor axis length of the 50 equidistant cross-section positions, normalised by the average value of the semi-minor axis length of the 50 equidistant cross-section positions; and/or
having a **relative total area variation (tav)** of less than 0.100, wherein tav is determined as the absolute difference between the smallest cross-sectional area at a cross-section position and the largest cross-sectional area of the 50 equidistant cross-section positions, normalised by the average value of the cross-sectional areas of the 50 equidistant cross-section positions,
wherein the 50 equidistant cross-section are positioned along the length l_{rod} of the glass rod, starting at a position of 0.01*l_{rod} as a first position and employing additive increments of 0.02*l_{rod} for each subsequent position.

### Description of the invention

### Glass rod

In a first aspect, the invention relates to a glass rod having a length l_{rod}, an average semi-major axis length lₘₐⱼₒᵣ₍ₐ₎ and an average semi-minor axis length lₘᵢₙₒᵣ₍ₐ₎, wherein the length l_{rod} is from 100 to 1600 mm,
wherein within a cross-section of the glass rod, lₘₐⱼₒᵣ₍ₙ₎ is the distance from the centre-of-mass of the cross-section to the furthest boundary of the glass rod within said cross-section and lₘᵢₙₒᵣ₍ₙ₎ is the distance from the centre-of-mass of the cross-section to the nearest boundary of the glass rod within said cross-section, lₘₐⱼₒᵣ₍ₙ₎ and lₘᵢₙₒᵣ₍ₙ₎ can be the same or different,
wherein the glass rod comprises a glass composition having a T4 temperature, defined as the temperature at which the glass has a viscosity of 10⁴ dPa·s, of 1400 °C or more,
having a total relative length variation of the semi-major axis a relative local area variation (lav) and a quality index defined as the sum **tlvₘₐⱼₒᵣ** + **lav,**
wherein **tlvₘₐⱼₒᵣ** is determined as the absolute difference between (a) the smallest semi-major axis length of 50 equidistant cross-section positions and (b) the largest semi-major axis length of the 50 equidistant cross-section positions, normalised by the average value of the semi-major axis lengths of the 50 equidistant cross-section positions lₘₐⱼₒᵣ₍ₐ₎,
the 50 equidistant cross-section are positioned along the length l_{rod} of the glass rod, starting at a position of 0.01*l_{rod} as a first position and employing additive increments of 0.02*l_{rod} for each subsequent position,
wherein **lav** is determined as the absolute difference between (c) the cross-sectional area at the cross-section position that has the largest semi-major axis length of the 50 equidistant cross-section positions and (d) the average value of the cross-sectional areas of the 50 equidistant cross-section positions, normalised by the average value of the cross-sectional areas of the 50 equidistant cross-section positions,
wherein the **quality index** is 0.090 or less, 0.070 or less, 0.050 or less.

The glass rod according to the invention is described with respect to its geometric (mathematical) properties, i.e. having a length l_{rod}, an average semi-major axis length lₘₐⱼₒᵣ₍ₐ₎ and an average semi-minor axis length lₘᵢₙₒᵣ₍ₐ₎, wherein the length l_{rod} is from 100 to 1600 mm. In its most perfect geometric form, the glass rod may be a cylinder having a length and a radius, in which case the average semi-major axis length lₘₐⱼₒᵣ₍ₐ₎ and the average semi-minor axis length lₘᵢₙₒᵣ₍ₐ₎ are identical, and wherein the radius assumes one and the same value along the entire length of the glass rod, irrespective at which cross-section it is measured. Technically produced glass rods, however, show slight geometric variations and may not adopt a mathematically perfect cylindrical shape, i.e. the circle base may be an ellipse or an ellipse-like base which can be described or approximated by a semi-major axis with length lₘₐⱼₒᵣ₍ₐ₎ and a semi-minor axis with length lₘᵢₙₒᵣ₍ₐ₎. Additionally, technically produced glass rods may display variations in the semi-major axis and the semi-minor axis along the length of the glass rod. For the sake of describing the glass rod according to the invention, it has been defined that the glass rod has a length l_{rod}, an average semi-major axis length lₘₐⱼₒᵣ₍ₐ₎ and an average semi-minor axis length lₘᵢₙₒᵣ₍ₐ₎. Further, for the sake of assessing and describing the uniformity of the glass rod according to the invention, 50 equidistant cross-section positions are measured. The 50 equidistant cross-section positions are positioned along the length l_{rod} of the glass rod, starting at a position of 0.01*l_{rod} as a first position and employing additive increments of 0.02*l_{rod} for each subsequent position, and calculating geometrically relevant parameters in a statistic fashion, i.e. calculating how the semi-major axis length lₘₐⱼₒᵣ₍ₙ₎ and the local area at a cross-section differs from the respective average value.

It is in line with the above notion and disclosure that within a cross-section of the glass rod, lₘₐ₋ⱼₒᵣ₍ₙ₎ is the distance from the centre-of-mass of the cross-section to the furthest boundary of the glass rod within said cross-section and lₘᵢₙₒᵣ₍ₙ₎ is the distance from the centre-of-mass of the cross-section to the nearest boundary of the glass rod within said cross-section, and that lₘₐⱼₒᵣ₍ₙ₎ and lₘᵢₙₒᵣ₍ₙ₎ can be the same or different. In case lₘₐⱼₒᵣ₍ₙ₎ and lₘᵢₙₒᵣ₍ₙ₎ are different, the two parameters refer to the respective distances from the centre-of-mass of the cross-section to the furthest and the nearest boundary of the glass rod within said cross-section. The values for lₘₐⱼₒᵣ₍ₙ₎ and lₘᵢₙₒᵣ₍ₙ₎ may be derived from the largest diameter and the smallest diameter within a cross-section, wherein, respectively, the largest diameter and the smallest diameter were divided by a factor of 2 to obtain lₘₐⱼₒᵣ₍ₙ₎ and lₘᵢₙₒᵣ₍ₙ₎. Implicitly, it is assumed that both the largest diameter and the smallest diameter go through the centre-of-mass in each measured cross-section.

The geometrically relevant parameters derived in this disclosure, e.g. the total relative length variation of the semi-major axis the relative local area variation (lav), the quality index, the average ovality, the total relative length variation of the semi-minor axis (**tlvₘᵢₙₒᵣ**), and the relative total area variation (tav), are the result of a "normalisation", for example by division of an associated average value, and therefore dimensionless. This kind of data extraction and presentation has been considered useful, and allows better comparison of the geometric fidelity of different glass rods, irrespective of their absolute dimensions.

In one embodiment, the length l_{rod} is 100 mm or more, 150 mm or more, 200 mm or more, 250 mm or more, 300 mm or more, 400 mm or more, 500 mm or more, 600 mm or more, or 700 mm or more. In one embodiment, the length l_{rod} is 1600 mm or less, 1550 mm or less, 1500 mm or less, 1450 mm or less, 1400 mm or less, 1300 mm or less, 1200 mm or less, 1100 mm or less, or 1000 mm or less. In one embodiment, the length l_{rod} is from 100 to 1600 mm, 150 mm to 1550 mm, 200 mm to 1500 mm, 250 mm to 1450 mm, 300 mm to 1400 mm, 400 mm to 1300 mm, 500 mm to 1200 mm, 600 mm to 1100 mm, or 700 mm to 1000 mm.

The glass rod comprises a glass composition having a T4 temperature, defined as the temperature at which the glass has a viscosity of 10⁴ dPa·s, of 1400 °C or more. In one embodiment, the glass composition has a T4 temperature of 1400 °C or more, 1450 °C or more, 1500 °C or more, or 1550 °C or more. In one embodiment, the glass composition has a T4 temperature of 1900 °C or less, 1850 °C or less, 1800 °C or less, or 1750 °C or less. In one embodiment, the glass composition has a T4 temperature of 1400 °C to 1900 °C, 1450 °C to 1850 °C, 1500 °C to 1800 °C, or 1550 °C to 1750 °C. The T4 temperature has been determined according to ISO 7884-2:1998-02. Viscosity values can generally be measured using a rotational viscosimeter, e.g. as described in DIN ISO 7884-2:1998-2.

For the purpose of assessing the uniformity of the glass rod, i.e. the geometric fidelity, a total relative length variation of the semi-major axis (**tlvₘₐⱼₒᵣ**) is calculated, a relative local area variation (lav) is calculated, and a quality index defined as the sum **tlvₘₐⱼₒᵣ** + **lav** is calculated.

The parameter **tlvₘₐⱼₒᵣ** is determined as the absolute difference between (a) the smallest semi-major axis length of 50 equidistant cross-section positions and (b) the largest semi-major axis length of the 50 equidistant cross-section positions, normalised by the average value of the semi-major axis lengths of the 50 equidistant cross-section positions.

The parameter lav is determined as the absolute difference between (c) the cross-sectional area at the cross-section position that has the largest semi-major axis length of the 50 equidistant cross-section positions and (d) the average value of the cross-sectional areas of the 50 equidistant cross-section positions, normalised by the average value of the cross-sectional areas of the 50 equidistant cross-section positions.

In one embodiment of the glass rod, the quality index is 0.090 or less, 0.080 or less, 0.070 or less, 0.060 or less, or 0.050 or less. In one embodiment of the glass rod, the quality index is 0.004 or more, 0.008 or more, 0.012 or more, 0.016 or more, or 0.020 or more. In one embodiment of the glass rod, the quality index is 0.004 to 0.090, 0.008 to 0.080, 0.012 to 0.070, 0.016 to 0.060, or 0.020 to 0.050.

In one embodiment, the glass rod has a lav of less than 0.070, less than 0.060, or less than 0.050. In one embodiment, the glass rod has a lav of 0.002 or more, 0.004 or more, or 0.006 or more. In one embodiment, the glass rod has a lav of 0.002 to 0.070, 0.004 to 0.060, or 0.006 to 0.050.

In one embodiment, the glass rod has a **tlvₘₐⱼₒᵣ** of less than 0.070, less than 0.060, or less than 0.050. In one embodiment, the glass rod has a **tlvₘₐⱼₒᵣ** of 0.002 or more, 0.004 or more, or 0.006 or more. In one embodiment, the glass rod has a **tlvₘₐⱼₒᵣ** of 0.002 to 0.070, 0.004 to 0.060, or 0.006 to 0.050.

In one embodiment of the glass rod, the average semi-major axis length lₘₐⱼₒᵣ₍ₐ₎ is from 0.9 to 3.1 mm, and the average semi-minor axis length lₘᵢₙₒᵣ₍ₐ₎ is from 0.9 to 3.1 mm,
wherein the semi-major axis length lₘₐⱼₒᵣ₍ₙ₎ is within a tolerance of 10%, or 5%, or 2% relative to the average semi-major axis length of the 50 equidistant cross-section positions, at each of the equidistant positions, and/or
wherein the semi-minor axis length lₘᵢₙₒᵣ₍ₙ₎ is within a tolerance of 10%, or 5%, or 2% relative to the average semi-minor axis length of the 50 equidistant cross-section positions, at each of the equidistant positions.

In one embodiment of the glass rod, the average semi-major axis length lₘₐⱼₒᵣ₍ₐ₎ is from 0.9 to 3.1 mm, and the average semi-minor axis length lₘᵢₙₒᵣ₍ₐ₎ is from 0.9 to 3.1 mm. In one embodiment of the glass rod, the average semi-major axis length lₘₐⱼₒᵣ₍ₐ₎ is from 1.2 to 2.8 mm, and the average semi-minor axis length lₘᵢₙₒᵣ₍ₐ₎ is from 1.2 to 2.8 mm. In one embodiment of the glass rod, the average semi-major axis length lₘₐⱼₒᵣ₍ₐ₎ is from 1.5 to 2.5 mm, and the average semi-minor axis length lₘᵢₙₒᵣ₍ₐ₎ is from 1.5 to 2.5 mm.

In one embodiment of the glass rod, the semi-major axis length lₘₐⱼₒᵣ₍ₙ₎ is within a tolerance of 10%, or 5%, or 2% relative to the average semi-major axis length of the 50 equidistant cross-section positions, at each of the equidistant positions.

In one embodiment of the glass rod, the semi-major axis length lₘₐⱼₒᵣ₍ₙ₎ is within a tolerance of 0.3 mm or less, 0.2 mm or less, 0.1 mm or less, or 0.05 mm or less relative to the average semi-major axis length of the 50 equidistant cross-section positions, at each of the equidistant positions.

In one embodiment of the glass rod, the semi-minor axis length lₘᵢₙₒᵣ₍ₙ₎ is within a tolerance of 10%, or 5%, or 2% relative to the average semi-minor axis length of the 50 equidistant cross-section positions, at each of the equidistant positions.

In one embodiment of the glass rod, the semi-minor axis length lₘᵢₙₒᵣ₍ₙ₎ is within a tolerance of 0.3 mm or less, 0.2 mm or less, 0.1 mm or less, or 0.05 mm or less relative to the average semi-major axis length of the 50 equidistant cross-section positions, at each of the equidistant positions.

In one embodiment of the glass rod, the bow or curvature is between 0.030 and 0.300 mm, measured according to DIN EN ISO 1101:2017-09 and at a support distance of 300 mm. In one embodiment, the bow or curvature is 0.030 mm or more, 0.050 mm or more, 0.070 mm or more, or 0.100 mm or more. In one embodiment, the bow or curvature is 0.300 mm or less, 0.270 mm or less, 0.230 mm or less, or 0.200 mm or less. In one embodiment, the bow or curvature is 0.030 mm to 0.300 mm, 0.050 mm to 0.270 mm, 0.070 mm to 0.230 mm, or 0.100 mm to 0.200 mm.

In one embodiment, the glass rod has an average ovality defined as 2*(lₘₐⱼₒᵣ₍ₙ₎ - lₘᵢₙₒᵣ₍ₙ₎)/(lₘₐⱼₒᵣ₍ₙ₎ + lₘᵢₙₒᵣ₍ₙ₎), wherein the average ovality is sampled at 50 equidistant positions n along the glass rod and the average is calculated, and wherein the average ovality is 0.20 or less, less than 0.10, less than 0.050, or less than 0.030, at each of the equidistant positions. In one embodiment, the glass rod has an average ovality, sampled at the 50 equidistant positions along the glass rod, of 0.002 or more, 0.005 or more, 0.010 or more, or 0.015 or more. In one embodiment, the glass rod has an average ovality, sampled at the 50 equidistant positions along the glass rod, of 0.002 to 0.20, 0.005 to 0.10, 0.010 to 0.050, or 0.015 to 0.030.

In one embodiment, the glass rod has a **total relative length variation of the semi-minor axis (tlvₘᵢₙₒᵣ)** of less than 0.040, wherein tlvₘᵢₙₒᵣ is determined as the absolute difference between the smallest semi-minor axis length and the largest semi-minor axis length of the 50 equidistant cross-section positions, normalised by the average value of the semi-minor axis length of the 50 equidistant cross-section positions.

In one embodiment, the glass rod has a **tlvₘᵢₙₒᵣ** of less than 0.040, or less than 0.030. In one embodiment, the glass rod has a **tlvₘᵢₙₒᵣ** of 0.005 or more, or 0.010 or more. In one embodiment, the glass rod has a **tlvₘᵢₙₒᵣ** of 0.005 to 0.040, or 0.010 to 0.030.

In one embodiment, the glass rod has a **relative total area variation (tav)** of less than 0.100, wherein tav is determined as the absolute difference between the smallest cross-sectional area at a cross-section position and the largest cross-sectional area of the 50 equidistant cross-section positions, normalised by the average value of the cross-sectional areas of the 50 equidistant cross-section positions.

In one embodiment, the glass rod has a **tav** of less than 0.100, less than 0.080, or less than 0.060. In one embodiment, the glass rod has a **tav** of 0.005 or more, 0.010 or more, or 0.020 or more. In one embodiment, the glass rod has a **tav** of 0.005 to 0.100, 0.010 to 0.080, or 0.020 to 0.060.

The skilled person knows that numerical values relating to measurements are subject to measurement errors which place limits on their accuracy. For this reason, the general convention in the scientific and technical literature shall be applied to this disclosure, i.e. the last decimal place of a numerical value indicates its degree of accuracy. Where no other error margins are given, the maximum margin is ascertained by applying the rounding-off convention to the last decimal place, e.g. for a (measured) value of 3.5, the error margin is 3.45 to 3.54.

In one embodiment, the glass rod is characterised by one or more of the following properties:
- the number of bubbles is less than 10, less than 5, or less than 2, wherein the length of a bubble is at least 0.5 mm measured as the largest linear distance in the bubble; and/or
- the length of a bubble, measured as the largest linear distance in the bubble, is less than 70 mm, less than 50 mm, or less than 10 mm; and/or
- an absence of a stretch of bubbles of more than 100 mm, wherein the stretch of bubbles is defined as the occurrence of a sequence of bubbles disposed one after the other in glass rod length direction, the bubbles having a distance between two neighbouring bubbles which is less than the length of the bubble with the largest length in the sequence.

Individual bubbles may be observed by the naked eye, for example using a light table, and may be captured by photography. Individual bubbles may have an almost spherical shape, but may also appear as longitudinal, e.g. ellipsoid-shaped, bubbles, also referred to as airlines, whose length is measured along a longitudinal axis. Longitudinal bubbles may not have a geometrically well-defined shape and may thus be irregular in shape. A bubble is counted, provided that the length of a bubble is at least 0.5 mm measured as the largest linear distance in the bubble. If more than one bubble is observed, these may appear in the form of stretches.

In one embodiment, the glass rod has a number of bubbles of less than 10, less than 5, or less than 2, or 0, wherein the length of a bubble is at least 0.5 mm measured as the largest linear distance in the bubble.

### Glass composition

In one embodiment, the glass rod comprises a glass composition comprises one or more or all of the following constituents in percent by weight:
- 70.0% to 90.0% of SiO₂,
- 0.0% to 25.0% of B₂O₃,
- 0.0% to 10.0% of Al₂O₃,
- 0.0% to 10.0% of one or more alkali earth metal oxides,
- 0.0% to 7.0% of one or more alkali metal oxides.

In this disclosure, the reference to a glass and the reference to a glass composition shall be understood as the same subject-matter.

In one embodiment the glass comprises SiO₂ in an amount of 70.0% by weight or more, 72.0% by weight or more, 74.0% by weight or more, 76.0% by weight or more, 78.0% by weight or more, or 80.0% by weight or more. In one embodiment the glass comprises SiO₂ in an amount of 90.0% by weight or less, 89.0% by weight or less, 88.0% by weight or less, 87.0% by weight or less, or 86.0% by weight or less. In one embodiment the glass comprises SiO₂ in an amount of 70.0% to 90.0% by weight, 72.0% to 89.0% by weight, 74.0% to 88.0% by weight, 76.0% to 87.0% by weight, or 78.0% to 86.0% by weight.

In one embodiment the glass is a borosilicate glass comprising SiO₂ in an amount of 70.0% to 90.0% by weight, 72.0% to 89.0% by weight, 74.0% to 88.0% by weight, 76.0% to 87.0% by weight, or 78.0% to 86.0% by weight.

In one embodiment the glass comprises one or more or all of the following constituents in percent by weight: 70.0% to 90.0% of SiO₂, 0.0% to 25.0% of B₂O₃, 0.0% to 10.0% of Al₂O₃, 0.0% to 10.0% of one or more alkali earth metal oxides, 0.0% to 7.0% of one or more alkali metal oxides.

In one embodiment the glass comprises one or more or all of the following constituents in percent by weight: 75.0% to 87.0% of SiO₂, 8.0% to 22.0% of B₂O₃, 1.0% to 7.0% of Al₂O₃, 0.25% to 5.0% of one or more alkali earth metal oxides, 0.0% to 5.0% of one or more alkali metal oxides.

In the context of the present invention, alkali metal oxides are meant to include specifically Li₂O, Na₂O and K₂O, and alkali earth metal oxides are meant to include specifically MgO, CaO, BaO and SrO.

In one embodiment, the glass comprises 0.0% to 10.0% of one or more alkali earth metal oxides, in percent by weight, such as 1.0% to 9.0%, 2.0% to 8.0%, 3.0% to 7.0%, or 4.0% to 6.0%.

In one embodiment, the glass comprises 0.0% to 7.0% of one or more alkali metal oxides, in percent by weight, such as 0.5% to 6.5%, 1.0% to 6.0%, 1.5% to 5.5%, or 2.0% to 5.0%.

In one embodiment, the glass comprises in percent by weight:

| | |
|---|---|
| SiO₂ | 70.0% to 90.0% |
| B₂O₃ | >0.0% to 25.0% |
| Al₂O₃ | >0.0% to 10.0% |
| BaO | 0.0% to 5.0% |
| CaO | 0.0% to 3.0% |
| K₂O | 0.0% to 5.0% |
| Na₂O | 0.0% to 5.0% |
| Li₂O | 0.0% to 1.0% |

In one embodiment the glass comprises B₂O₃ in an amount of 1.0% or more by weight, 2.0% or more by weight, 4.0% or more by weight, 6.0% or more by weight, or 8.0% or more by weight.

In one embodiment the glass comprises B₂O₃ in an amount of 25.0% or less by weight, 22.0% or less by weight, 20.0% or less by weight, 18.0% or less by weight, 15.0% or less by weight, 12.0% or less by weight. In one embodiment the glass comprises B₂O₃ in an amount of 1.0% to 25.0% by weight, 2.0% to 22.0% by weight, 4.0% to 20.0% by weight, 6.0% to 18.0% by weight, or 8.0% to 15.0% by weight.

In one embodiment the glass comprises Al₂O₃ in an amount of 1.0% or more by weight, 2.0% or more by weight, 3.0% or more by weight, or 4.0% or more by weight. In one embodiment the glass comprises Al₂O₃ in an amount of 10.0% or less by weight, 9.0% or less by weight, 8.0% or less by weight, 7.0% or less by weight, or 6.0% or less by weight. In one embodiment the glass comprises Al₂O₃ in an amount of 0.0% to 10.0% by weight, 1.0% to 9.0% by weight, 2.0% to 8.0% by weight, 3.0% to 7.0% by weight, or 4.0% to 6.0% by weight.

In one embodiment, the glass comprises 0.0% to 5.0% of BaO, in percent by weight, such as 0.5% to 4.5%, 1.0% to 4.0%, 1.5% to 3.5%, or 2.0% to 3.0%. In one embodiment, the glass comprises 0.0% BaO or more, in percent by weight, 0.5% or more, 1.0% or more, 1.5% or more, or 2.0% or more. In one embodiment, the glass comprises 5.0% of BaO or less, in percent by weight, 4.5% or less, 4.0% or less, 3.5% or less, or 3.0% or less.

In one embodiment, the glass comprises 0.0% to 3.0% of CaO, in percent by weight, such as 0.2% to 2.8%, 0.4% to 2.6%, 0.6% to 2.4%, 0.8% to 2.2%, or 1.0% to 2.0%. In one embodiment, the glass comprises 0.0% CaO or more, in percent by weight, 0.2% or more, 0.4% or more, 0.6% or more, 0.8% or more, or 1.0% or more. In one embodiment, the glass comprises 3.0% of CaO or less, in percent by weight, 2.8% or less, 2.6% or less, 2.4% or less, 2.2% or less, or 2.0% or less.

In one embodiment, the glass comprises 0.0% to 5.0% of K₂O, in percent by weight, such as 0.5% to 4.5%, 1.0% to 4.0%, 1.5% to 3.5%, or 2.0% to 3.0%. In one embodiment, the glass comprises 0.0% of K₂O or more, in percent by weight, 0.5% or more, 1.0% or more, 1.5% or more, or 2.0% or more. In one embodiment, the glass comprises 5.0% of K₂O or less, in percent by weight, 4.5% or less, 4.0% or less, 3.5% or less, or 3.0% or less.

In one embodiment, the glass comprises 0.0% to 5.0% of Na₂O, in percent by weight, such as 0.5% to 4.5%, 1.0% to 4.0%, 1.5% to 3.5%, or 2.0% to 3.0%. In an alternative embodiment, the glass comprises 0.0% to 3.0% of Na₂O, in percent by weight, such as 0.1% to 2.5%, 0.2% to 2.0%, 0.3% to 1.5%, or 0.4% to 1.0%. In one embodiment, the glass comprises 0.0% of Na₂O or more, in percent by weight, 0.1% or more, 0.2% or more, 0.3% or more, or 0.4% or more. In one embodiment, the glass comprises 3.0% of Na₂O or less, in percent by weight, 2.5% or less, 2.0% or less, 1.5% or less, or 1.0% or less.

In one embodiment, the glass comprises 0.0% to 1.0% of Li₂O, in percent by weight, such as 0.1% to 0.9%, 0.2% to 0.8%, 0.3% to 0.7%, or 0.4% to 0.6%. In one embodiment, the glass comprises 0.0% of Li₂O or more, in percent by weight, 0.1% or more, 0.2% or more, 0.3% or more, or 0.4% or more. In one embodiment, the glass comprises 1.0% of Li₂O or less, in percent by weight, 0.9% or less, 0.8% or less, 0.7% or less, or 0.6% or less.

In one embodiment, the glass comprises 1000 ppm (by weight) Fe₂O₃ or less, 500 ppm (by weight) Fe₂O₃ or less, 200 ppm (by weight) Fe₂O₃ or less, 100 ppm (by weight) Fe₂O₃ or less, 50 ppm (by weight) Fe₂O₃ or less, or 20 ppm (by weight) Fe₂O₃ or less. In one embodiment, the glass comprises 1 ppm (by weight) Fe₂O₃ or more, 2 ppm (by weight) Fe₂O₃ or more, 3 ppm (by weight) Fe₂O₃ or more, 5 ppm (by weight) Fe₂O₃ or more, 7 ppm (by weight) Fe₂O₃ or more, or 10 ppm (by weight) Fe₂O₃ or more. In one embodiment, the glass comprises 1 to 1000 ppm (by weight) Fe₂O₃, 2 to 500 ppm (by weight) Fe₂O₃, 3 to 200 ppm (by weight) Fe₂O₃, 5 to 100 ppm (by weight) Fe₂O₃, 7 to 50 ppm (by weight) Fe₂O₃, or 10 to 20 ppm (by weight) Fe₂O₃.

In one embodiment, the glass comprises in percent by weight:

| | |
|---|---|
| SiO₂ | 75.0% to 87.0% |
| B₂O₃ | 8.0% to 22.0% |
| Al₂O₃ | 1.0% to 7.0% |
| BaO | 0.0% to 3.0% |
| CaO | 0.0% to 2.0% |
| K₂O | 0.0% to 3.0% |
| Na₂O | 0.0% to 3.0% |
| Li₂O | 0.0% to 1.0% |

In one embodiment, the glass comprises in percent by weight:

| | |
|---|---|
| SiO₂ | 77.0% to 87.0% |
| B₂O₃ | 8.0% to 13.0% |
| Al₂O₃ | 3.0% to 7.0% |
| BaO | 0.0% to 3.0% |
| CaO | 0.0% to 2.0% |
| K₂O | 0.0% to 3.0% |
| Na₂O | 0.0% to 1.0% |
| Li₂O | 0.0% to 1.0% |

In one embodiment the glass is free of one or more or all of lithium, magnesium, potassium, calcium, sodium, lead, arsenic, antimony.

If this description refers to a glass which is free of a component or does not contain a certain component, or includes the hypothetical case of 0% by weight of that component, it is to be understood that this component may at most be present as an impurity. This means that it is not added in significant quantities and that it is not added intentionally. The term "component" refers to the elemental species as such as well as any molecule containing the element. Non-essential amounts are to be understood as less than 100 ppm, preferably less than 50 ppm, and most preferably less than 10 ppm, based on weight with respect to all intentionally added components.

In one embodiment, the glass composition has a thermal expansion of 0.95·10⁻⁶ to 3.20·10⁻⁶ K⁻¹, measured in the temperature range of 20 to 300 °C, and determined according to ISO 7991:1987. In one embodiment, the glass composition has a thermal expansion of at least 0.95·10⁻⁶ K⁻¹, at least 1.00·10⁻⁶ K⁻¹, at least 1.05,10⁻⁶ K⁻¹, at least 1.10·10⁻⁶ K⁻¹, at least 1.20·10⁻⁶ K⁻¹, or at least 1.50·10⁻⁶ K⁻¹. In one embodiment, the glass composition has a thermal expansion 3.20·10⁻⁶ K⁻¹ or less, 3.00·10⁻⁶ K⁻¹ or less, 2.70·10⁻⁶ K⁻¹ or less, 2.20·10⁻⁶ K⁻¹ or less, 2.00·10⁻⁶ K⁻¹ or less. In one embodiment, the glass composition has a thermal expansion of 0.95·10⁻⁶ to 3.20·10⁻⁶ K⁻¹, 1.00·10⁻⁶ to 3.00·10⁻⁶ K⁻¹, 1.05·10⁻⁶ to 2.70·10⁻⁶ K⁻¹, 1.10·10⁻⁶ to 2.20·10⁻⁶ K⁻¹, 1.20·10⁻⁶ to 2.20·10⁻⁶ K⁻¹, 1.50·10⁻⁶ to 2.00·10⁻⁶ K⁻¹.

In one embodiment, the glass composition has a transformation temperature of 600 to 750 °C, measured by ISO 7884-8. In one embodiment, the glass composition has a transformation temperature of at least 600 °C, at least 615 °C, at least 635 °C, at least 650 °C, at least 680 °C, or at least 695 °C. In one embodiment, the glass composition has a transformation temperature of 750 °C or less, 730 °C or less, or 710 °C or less. In one embodiment, the glass composition has a transformation temperature of 600 to 750 °C, 615 to 730 °C, or 635 to 710 °C.

### Set of glass rods

In one aspect, the invention relates to a set of glass rods comprising at least 40 glass rods according to this disclosure. Advantageously, the set provides uniform glass rods with only little geometric variations and anomalies between the different rods. Robot-controlled or other automated processes may therefore be run unsupervised using one set of glass rods. Advantageously, this allows efficient production of further components, such as e.g. flash lamps, which rely on the glass rods as a precursor component.

In one embodiment, the set comprises at least 40 glass rods, at least 70 glass rods, or at least 100 glass rods. In one embodiment, the set comprises 1000 glass rods or less, 700 glass rods or less, or 400 glass rods or less. In one embodiment, the set comprises 40 to 1000 glass rods, 70 to 700 glass rods, or 100 to 400 glass rods.

In one embodiment of the set of glass rods, at least 80% of the glass rods have one or more of the following properties:
- absence of bubbles, defined as fully enclosed longitudinal voids within the glass rod, preferably formed by gas inclusions in the glass, whereby the gas can be gaseous at 20 °C and/or can condense after cooling and a bubble with reduced pressure is formed, having a diameter of 0.15 mm or less at the largest extension in a cross-sectional direction of the glass rod, and having a length of 50 mm or less along the largest extension of the glass rod;
- essential absence of open bubbles, wherein the length of a bubble is at least 0.5 mm measured as the largest linear distance in the bubble;
- absence of inclusions, defined as foreign material fully enclosed in the glass rod having a size of 100 µm or more, preferably metallic particle inclusions and/or non-metallic particle inclusions.

An open bubble appears visually as a bubble on the surface of the glass rod. An open bubble may occur after a previous fully enclosed void has burst open. An open bubble thus does not keep and/or does not enclose gas inclusions in the glass anymore.

In one embodiment of the set of glass rods, at least 80%, at least 85%, at least 90%, at least 95%, at least 98%, or at least 99%, of the glass rods have one or more of the above properties.

In one embodiment of the set of glass rods, at least 99% of the glass rods have an absence of bubbles, defined as fully enclosed longitudinal voids within the glass rod, preferably formed by gas inclusions in the glass, whereby the gas can be gaseous at 20 °C and/or can condense after cooling and a bubble with reduced pressure is formed, having a diameter of 0.15 mm or less at the largest extension in a cross-sectional direction of the glass rod, and having a length of 50 mm or less along the largest extension of the glass rod.

In one embodiment of the set of glass rods, at least 99% of the glass rods have an essential absence of open bubbles, wherein the length of a bubble is at least 0.5 mm measured as the largest linear distance in the bubble.

In one embodiment of the set of glass rods, at least 99% of the glass rods have an absence of inclusions, defined as foreign material fully enclosed in the glass rod having a size of 100 µm or more, preferably metallic particle inclusions and/or non-metallic particle inclusions.

### Process for the production of a glass rod

In one aspect, the invention relates to a process for the production of a glass rod comprising the steps
- providing a reactor (1) comprising a lower drain opening (2);
- heating glass raw material in the reactor to obtain a glass melt (3);
- heating the glass melt at least partially to a temperature T2.5, defined as the temperature at which the glass melt has a viscosity of 10^{2,5} dPa·s;
- withdrawing the glass melt from the reactor at a withdrawal temperature and at a glass melt withdrawal rate; and
- increasing the withdrawal temperature in order to control the glass melt withdrawal rate, and/or adjusting a pressure above the glass melt to control the glass melt withdrawal rate;
- cooling and/or forming the glass melt to obtain a glass rod (5) and/or obtaining the glass rod (5) according to any one of claims 1 to 7,
wherein the glass melt has a glass composition with a T4 temperature of 1400 °C or more, wherein T4 is the temperature at which the glass melt composition has a viscosity of 10⁴ dPa·s.

The withdrawal temperature of the glass melt may be measured by an IR pyrometer (6). In one embodiment, the withdrawal temperature relates to and/or is monitored as the surface temperature of the glass melt at the glass melt/air interface, wherein the highest temperature at the glass melt/air interface is used as a reference value for the withdrawal temperature. In an alternative embodiment, the withdrawal temperature is measured and/or controlled at the drain opening.

Preferably the pressure above the glass melt is measured by a pressure sensor (7). The pressure above the glass melt thus refers to conditions in the reactor and above the glass melt.

The glass melt withdrawal rate from the reactor quantifies the amount of glass melt leaving the reactor per time unit and may be expressed in m min⁻¹ with respect to the length of the glass rod emanating from the lower drain opening and/or be expressed as a volume flow rate in ml min⁻¹. Both parameters are related to each other through the cross-sectional area of the glass rod and refer to time average values.

Optionally, the process for the production of a glass rod provides a glass rod or a set of glass rods according to this disclosure.

The inventors have established manufacturing conditions for the production of a glass rod which is highly uniform, e.g. with respect to a minimised total relative length variation of the semi-major axis (**tlvₘₐⱼₒᵣ**) and/or a minimised relative local area variation (lav), thus having a desirably low value for the quality index defined as the sum of **tlvₘₐⱼₒᵣ** and **lav**.

In one embodiment, the reactor comprising a lower drain opening is a batch-type reactor. In an alternative embodiment, the reactor comprising a lower drain opening is a continuous reactor.

In one embodiment, heating glass raw material in the reactor to obtain a glass melt comprises providing a batch or an admixture of oxides, wherein the oxides may be selected from the list of SiO₂, B₂O₃, Al₂O₃, one or more alkali earth metal oxides, and one or more alkali metal oxides, and heating the batch or the admixture of oxides until melting.

In one embodiment, the glass melt is heated at least partially to a temperature T2.5, defined as the temperature at which the glass melt has a viscosity of 10^{2,5} dPa·s. A melting temperature T2.5 may provide for a sufficiently low viscosity and may thus enable uniform mixing of the oxides provided with the raw material to obtain a homogeneous glass melt.

In one embodiment, the glass melt is heated at least partially to a temperature T2.3. In one embodiment, the glass melt is heated at least partially to a temperature T2.1 or less. In one embodiment, the glass melt is heated at least partially to a temperature of T2.5 to T2.1.

In one embodiment, the step heating the glass melt at least partially to a temperature T2.5 is carried out in a batch reactor or a continuous reactor for a time sufficient to establish a homogeneous glass melt. Depending on the chosen admixture of oxides in the raw material, and the reactor type (continuous or batch), the skilled person knows how to establish a temperature T2.5 in order to obtain a homogeneous glass melt.

In one embodiment, the entire glass melt in the reactor is heated to a temperature T2.5. In one embodiment, the entire glass melt in the reactor is heated to a temperature of T2.5 to 2.1.

The temperature in the reactor may be assessed and or controlled using suitable temperature probes that are able to operate at the high temperatures required for the glasses according to the invention.

It is preferred that the glass melt viscosity will not be less than 100 dPas. Heating the glass to very low viscosities increases erosion of the melting tank walls and may potentially introduce impurities in the glass composition. In addition, low viscosities correspond to very high temperatures which require large power consumption which is not desirable.

The manufacturing conditions control the glass melt withdrawal from the reactor at a withdrawal temperature and at a glass melt withdrawal rate, while increasing the withdrawal temperature in order to control the glass melt withdrawal rate, and/or adjusting a pressure above the glass melt to control the glass melt withdrawal rate.

The temperature of glass melt withdrawal relates to the temperature of the glass melt. The temperature of the glass melt is measurable using suitable temperature probes, e.g. an IR pyrometer, which allow monitoring and controlling the process to the effect that the intended tolerance of the temperature has to be kept.

In one embodiment of the process, the glass melt is withdrawn at a withdrawal temperature of at least 50 °C above T4, preferably between 50 to 130 °C above T4, with a tolerance of 10 °C, or 5 °C, or 3° C, wherein preferably glass melt withdrawal from the reactor is performed via a drain opening.

In one embodiment, the drain opening is a nozzle having a conical inner shape. Advantageously, the nozzle may be designed such and/or used to control the characteristics of a fluid flow of the glass melt as it exits the reactor. A nozzle thus allows to control the withdrawal rate of the glass melt as well as the shape of the glass melt stream that emerges from the reactor. The withdrawal rate of the glass melt may be expressed in m min⁻¹ and refers to a length section of produced glass rod per time, or be expressed as a volume flow rate in ml min⁻¹ referring to the volume of glass melt leaving the reactor per time unit.

In one embodiment, the drain opening may be heated independently. The skilled person is aware that at the high temperatures required for glass production, temperature gradients in the glass melt may arise in the reactor. It is thus of advantage to monitor the temperature of the glass melt in the reactor, preferably also including the drain opening, and to control and/or adjust the temperature at the drain opening via independent heating means, if necessary. Such independent heating means may for example be electromagnetic coils.

In one embodiment of the process, the withdrawal temperature is increased in order to control the glass melt withdrawal rate with a tolerance of 2% or less, or 1% or less.

In one embodiment of the process, a pressure above the glass melt is adjusted to control the glass melt withdrawal rate with a tolerance of 2% or less, or 1% or less.

In one embodiment of the process, increasing the withdrawal temperature in order to control the glass melt withdrawal rate comprises increasing the withdrawal temperature in temperature increments of 1 °C and increasing the withdrawal temperature by 30 °C, 20 °C, 10 °C, 5 °C, or 3° C during withdrawal of the glass melt. Depending on the reactor type and reactor conditions, said regime of temperature increase during glass melt withdrawal may provide for obtaining the glass rods according to the invention, i.e. may provide for uniform, geometrically defined glass rods.

It is advantageous to control the glass melt withdrawal from the reactor within narrow (volume flow) rate boundaries, and to thus work at a near constant glass mass stream emanating from the reactor, in order to minimise possible deviations in the obtained glass rod. The guarantee of a constant glass mass stream at the drain opening yields a glass rod with defined measures and thus a high precision. The high precision manifests itself in a minimised total relative length variation of the semi-major axis and/or a minimised relative local area variation.

The glass melt withdrawal from the reactor may be described and quantified with a rate in terms of 'm min⁻¹' and/or a volume flow rate in terms of 'ml min⁻¹'. The rate of glass melt withdrawal from the reactor shall be fairly constant. With respect to a given average rate of withdrawal, a tolerance of 1% means that the highest rate of withdrawal and the lowest rate of withdrawal should not deviate by more than 1% from each other based on the average rate of withdrawal.

It is advantageous to control that the glass melt is withdrawn at a withdrawal temperature of at least 50 °C above T4, with a tolerance of 10 °C, or 5 °C, or 3° C, because the viscosity has to be large enough to provide for flowing conditions of the glass melt at the step of drawing the glass melt into a rod. At the same time, the temperature deviation of the glass melt at the drawing step has to be kept small, e.g. with a tolerance of 10 °C, or 5 °C, or 3° C, in order to avoid inhomogeneities in the glass melt composition and the glass melt viscosity. A tolerance of e.g. 10 °C during withdrawal means that the highest and the lowest temperature may not deviate more than 10 °C from each other during the running of a single process for the production of glass rods of one specific glass composition.

In one embodiment, the glass melt is withdrawn at a withdrawal temperature of between 50 to 130 °C above T4, with a tolerance of 10 °C, or 5 °C, or 3° C. The exact temperature of glass melt withdrawal may depend on the glass composition and the type and geometric features of the reactor. It may be advantageous to control the temperature of glass melt withdrawal within narrow ranges relating to a tolerance of 10 °C, or 5 °C, or 3° C. This temperature control is normally automated, but may further be controlled by direct operator instructions during manufacture. For example, at the start of a process, it may be or become necessary to reduce the temperature by up to 20 °C, e.g. when the viscosity of the glass composition is too high, and or to implement a feedback-control of up to 50 °C.

In one embodiment, the glass melt is withdrawn at a withdrawal temperature of between 50 to 130 °C above T4, between 55 to 125 °C above T4, between 60 to 120 °C above T4, between 65 to 115 °C above T4, between 70 to 110 °C above T4, between 75 to 105 °C above T4, or between 80 to 100 °C above T4. In one embodiment, the glass melt is withdrawn at a temperature of 50 °C above T4 or more, 55 °C above T4 or more, 60 °C above T4 or more, 65 °C above T4 or more, 70 °C above T4 or more, 75 °C above T4 or more, or 80 °C above T4 or more. In one embodiment, the glass melt is withdrawn at a temperature of 130 °C above T4 or less, 125 °C above T4 or less, 120 °C above T4 or less, 115 °C above T4 or less, 110 °C above T4 or less, 105 °C above T4 or less, or 100 °C above T4 or less.

In one embodiment, glass melt withdrawal from the reactor is performed via a nozzle as a drain opening. A nozzle suitable for glass melt withdrawal comprises an alloy, wherein the alloy comprises 90 wt.% or more of iridium. Advantageously, a nozzle may allow and/or guarantee a smooth process of production.

Cooling the glass melt to obtain a glass rod takes place after the glass melt passes the drain opening. Advantageously, process conditions are established such that the average cooling rate of the glass rod is 2000 K h⁻¹ or less, until the T4 temperature is reached, which retains the homogeneity of the glass composition and the uniformity of the glass rod. After the glass melt has been cooled to the T4 temperature, subsequent cooling may proceed at faster cooling rates.

In one embodiment, the average cooling rate of the glass rod is 1000 K h⁻¹ or less, 500 K h⁻¹ or less, 200 K h⁻¹ or less, or 5 K h⁻¹ or less. In one embodiment, the cooling rate of the glass rod is 1 K h⁻¹ or more, 2 K h⁻¹ or more, or 3 K h⁻¹ or more. In one embodiment, the cooling rate of the glass rod is 1 K h⁻¹ to 20 K h⁻¹, 2 K h⁻¹ to 15 K h⁻¹, or 3 K h⁻¹ to 10 K h⁻¹.

Forming the glass melt to obtain a glass rod is mainly effected at the drain opening, i.e. when the glass melt leaves the reactor.

In one embodiment, the glass melt has a glass composition with a T4 temperature of 1400 °C or more, wherein T4 is the temperature at which the glass melt composition has a viscosity of 10⁴ dPa·s.

In one embodiment, the glass melt has a glass composition with a T4 temperature of 1400 °C or more, 1450 °C or more, 1500 °C or more, or 1550 °C or more. In one embodiment, the glass melt has a glass composition with a T4 temperature of 1900 °C or less, 1850 °C or less, 1800 °C or less, or 1750 °C or less. In one embodiment, the glass melt has a glass composition with a T4 temperature of 1400 °C to 1900 °C, 1450 °C to 1850 °C, 1500 °C to 1800 °C, or 1550 °C to 1750 °C.

In one embodiment of the process, the withdrawal of the glass melt from the reactor is at a rate of 2 to 50 m min⁻¹ with respect to the length of the glass rod emanating from the lower drain opening and/or withdrawing the glass melt from the reactor at a volume flow rate of 15 to 150 ml min⁻¹.

In one embodiment of the process, the withdrawal of the glass melt from the reactor is at a rate of 2 m min⁻¹ or more, 5 m min⁻¹ or more, or 10 m min⁻¹ or more. In one embodiment of the process, the withdrawal of the glass melt from the reactor is at a rate of 50 m min⁻¹ or less, 40 m min⁻¹ or less, or 30 m min⁻¹ or less. In one embodiment of the process, the withdrawal of the glass melt from the reactor is at a rate of 2 to 50 m min⁻¹, 5 to 40 m min⁻¹, or 10 to 30 m min⁻¹.

In one embodiment of the process, the withdrawal of the glass melt from the reactor is at a volume flow rate of 15 to 150 ml min⁻¹, 25 to 120 ml min⁻¹, or 50 to 100 ml min⁻¹. In one embodiment of the process, the withdrawal of the glass melt from the reactor is at a volume flow rate of 15 ml min⁻¹ or more, 25 ml min⁻¹ or more, or 50 ml min⁻¹ or more. In one embodiment of the process, the withdrawal of the glass melt from the reactor is at a volume flow rate of 150 ml min⁻¹ or less, 120 ml min⁻¹ or less, or 100 ml min⁻¹ or less.

In one embodiment of the process, optionally being a batch process, the process comprises a further step of discontinuing the withdrawal of the glass melt from the reactor, which is preferably operated as a batch reactor, before a consumption of the glass melt of 90% is reached, or 80%, or 70%, or 60%, or 50%. In a batch process, an initial glass melt is prepared and at some point withdrawal of the glass melt from the reactor is allowed to take place. Before the start of withdrawal, the amount of glass melt is 100%, irrespective of whether it is normalised to volume or mass. Consumption of the glass shall be understood as the % amount of glass melt that has been withdrawn from the reactor, i.e. formed into a glass rod. Advantageously, when the process is run in a batch-wise fashion, at least 50% of the glass melt from the reactor may be used and formed into glass rods without quality loss. It shall be understood that glass rod quality manifests itself in the homogeneity of the glass (melt) composition and high geometric uniformity of the obtained glass rods.

In case the glass melt composition starts displaying anomalies during the process, withdrawal needs to be stopped in order to preserve the quality of the glass rods already obtained. It shall be understood that the process requires tight monitoring and supervision, and possibly also operator intervention. Anomalies of the glass melt composition that may occur or may be observed during the process include discoloration of the glass melt and milky appearances of or in the glass melt.

In one embodiment, the process further comprises the steps of
- continuing the withdrawal of the glass melt from the reactor, which is preferably operated as a batch reactor, once a consumption of the glass melt of 90% is reached; and
- heating a melt surface,
wherein heating the melt surface provides for maintaining the glass melt withdrawal from the reactor at a rate with a tolerance of 1% or less and/or at a volume flow rate with a tolerance of 1% or less.

Advantageously, in the absence of anomalies, the process, i.e. withdrawal of the glass melt from the reactor, may be continued, once a consumption of the glass melt of 90% is reached. To this end, in order to maintain the desired glass rod quality, the melt surface needs to be heated, wherein heating the melt surface provides for maintaining the glass melt withdrawal from the reactor at a rate with a tolerance of 1% or less and/or at a volume flow rate with a tolerance of 1% or less.

The heating of the melt surface effects a lowering of the viscosity which is adjusted in such a way in order to counteract the reduced hydrostatic pressure in the reactor. Optionally, heating of the melt surface is either controlled manually, i.e. by operator intervention, or via a pre-programmed time ramp.

The heating of the melt surface may rely on the introduction and burning of combustion gases which leads to an additional pressure inside the reactor. In order to achieve and/or control a variation of that pressure, a purge opening, or valve-like opening, may be employed and chosen such that a purge diameter may be varied. Based on a lowering of the glass level height in the reactor of 10 mm (h), and a density (p) of 2.24 g mL⁻¹, it has been estimated that a pressure loss (p) of 220 Pa needs to be compensated in order to counteract the reduced hydrostatic pressure, using the equation p = ρ·h·g, wherein g is 9.81 m s⁻².

In one embodiment, adjusting a pressure above the glass melt includes one or more of the following means:
- hermetic seal of the reactor; and
- employing pressurised air to compensate for the pressure decay at the lower drain opening.

In one embodiment, the process is conducted under exclusive heating by electric means, in order to eliminate emission gases, such as e.g. CO₂, and/or wherein a contact surface of the reactor, with which the glass melt is in contact, comprises 30 wt.% or more contact material in the form of a cast zirconia material comprising more than 70 wt.% ZrO₂ and/or a contact surface of the reactor, with which the glass melt is in contact, comprises sintered material with more than 80 wt.%, or more than 90 wt.%, or more than 95 wt.% zirconium silicate.

Advantageously, control of the hydrostatic pressure allows to establish and/or maintain a constant glass melt withdrawal from the reactor.

Whereas the two means of a hermetic seal of the reactor, and exclusive heating by electric means, in order to eliminate emission gases, such as e.g. CO₂, provide that no internal pressure is built up, it may be necessary to employ pressurised air to compensate for the pressure decay at the lower drain opening during the ongoing process in order to maintain a near-constant hydrostatic pressure.

In one embodiment, the glass rod, optionally obtained, by the process, has a coefficient of thermal expansion in the temperature range from 20 °C to 300 °C of 0.8 ppm/K to 4.5 ppm/K.

In one embodiment, the glass rod has a thermal expansion of at least 0.95 ppm/K, at least 1.00 ppm/K, at least 1.05 ppm/K, at least 1.10 ppm/K, at least 1.20 ppm/K, or at least 1.50 ppm/K. In one embodiment, the glass rod has a thermal expansion 3.20 ppm/K or less, 3.00 ppm/K or less, 2.70 ppm/K or less, 2.20 ppm/K or less, 2.00 ppm/K or less. In one embodiment, the glass rod has a thermal expansion of 0.95 ppm/K to 3.20 ppm/K, 1.00 ppm/K to 3.00 ppm/K, 1.05 ppm/K to 2.70 ppm/K, 1.10 ppm/K to 2.20 ppm/K, 1.20 ppm/K to 2.20 ppm/K, 1.50 ppm/K to 2.00 ppm/K.

In one embodiment, the glass rod has a water content of at least 35 mmol/l, at least 40 mmol/l, at least 45 mmol/l, at least 50 mmol/l, or at least 55 mmol/l. In one embodiment, the glass rod has a water content of 250 mmol/l or less, 200 mmol/l or less, 150 mmol/l or less, 125 mmol/l or less, or 100 mmol/l or less. Accordingly, in a related embodiment, the glass has a water content of 35 to 250 mmol/l, 40 to 200 mmol/l, 45 to 150 mmol/l, 50 to 125 mmol/l, or 55 to 100 mmol/l.

The water content may be measured by IR spectrometry at the absorption maximum at about 2700 nm, wherein the absorption maximum is preferably determined on an IR absorption spectrum in the wavelength range from 2500 to 6500 nm, assuming a standard absorption coefficient of 110 l*cm/mol for the glass compositions according to this disclosure.

Advantageously, a water content of at least 35 mmol/l, or at least 55 mmol/l, may help to reduce glass fracture and/or the occurrence of glass anomalies upon repeated and multiple (re)heating and/or manufacturing of the glass.

### Flash lamp

In another aspect the invention relates to a flash lamp, comprising the glass rod according to this disclosure, the flash lamp further comprising an electrode (e.g. a tungsten or molybdenum electrode), and quartz glass, wherein the glass rod seals the quartz glass to the electrode.

In one embodiment, a flash lamp is provided comprising a metal electrode and a tube, wherein the tube preferably comprises or consists of glass, such as quartz glass, further comprising a sealing glass, wherein the sealing glass is taken from a glass rod according to this disclosure.

In one embodiment, a flash lamp is provided comprising an electrode, and a quartz glass tube, wherein the electrode, and the quartz glass tube are joined by sealing a glass rod according to this disclosure.

It is advantageous to use a glass rod according to this disclosure as a sealing glass because it provides for an excellent sealing junction, i.e. the fuse, between the electrode and the glass tube, even at extreme and rapid temperature changes. Advantageously, the stability and the lifespan of the manufactured flash lamps which undergo such extreme and rapid temperature changes during their lifecycle is thereby increased, i.e. when in use.

### Use

In a further aspect, the invention relates to a use of a glass rod according to this disclosure for joining a metal article to a glass element and/or for a flash lamp.

Advantageously, the uniformity of the glass rod according to the invention allows smooth mechanical robot handling because unevenness and irregularities in thickness are minimised to the extent that there is no stalling of the glass rod in the robot. During the manufacture of the flash lamp, the glass rod needs to be heated. A uniform glass rod which only has a small relative local area variation lav can be heated homogeneously and constantly to a desired narrow temperature range. The manufacturing temperatures of flash lamps are high, because the employed glass compositions are required to melt only at high temperatures, expressed in the property that the T4 temperature is 1400 °C or more. The glass rods according to the invention experience less temperature deviations during the manufacturing steps due to their high uniformity with respect to the cross-sectional area and the constancy of mass along the length of the glass rod. Advantageously, this provides for reduced glass fracture during manufacturing itself but also in the final product.

### Glass rod and glass composition

In one embodiment, the invention relates to a glass rod having a length l_{rod}, an average semi-major axis length Iₘₐⱼₒᵣ₍ₐ₎ and an average semi-minor axis length Iₘᵢₙₒᵣ₍ₐ₎, wherein the length l_{rod} is from 100 to 1600 mm,
wherein within a cross-section of the glass rod, Iₘₐⱼₒᵣ₍ₙ₎ is the distance from the centre-of-mass of the cross-section to the furthest boundary of the glass rod within said cross-section and Iₘᵢₙₒᵣ₍ₙ₎ is the distance from the centre-of-mass of the cross-section to the nearest boundary of the glass rod within said cross-section, Iₘₐⱼₒᵣ₍ₙ₎ and Iₘᵢₙₒᵣ₍ₙ₎ can be the same or different,
wherein the glass rod comprises a glass composition having a T4 temperature, defined as the temperature at which the glass has a viscosity of 10⁴ dPa·s, of 1400 °C or more,
having a total relative length variation of the semi-major axis a relative local area variation (lav) and a quality index defined as the sum **tlvₘₐⱼₒᵣ** + lav,
wherein **tlvₘₐⱼₒᵣ** is determined as the absolute difference between (a) the smallest semi-major axis length of 50 equidistant cross-section positions and (b) the largest semi-major axis length of the 50 equidistant cross-section positions, normalised by the average value of the semi-major axis lengths lₘₐⱼₒᵣ₍ₐ₎ of the 50 equidistant cross-section positions,
the 50 equidistant cross-section are positioned along the length I_{rod} of the glass rod, starting at a position of 0.01*l_{rod} as a first position and employing additive increments of 0.02*l_{rod} for each subsequent position,
wherein lav is determined as the absolute difference between (c) the cross-sectional area at the cross-section position that has the largest semi-major axis length of the 50 equidistant cross-section positions and (d) the average value of the cross-sectional areas of the 50 equidistant cross-section positions, normalised by the average value of the cross-sectional areas of the 50 equidistant cross-section positions,
wherein the quality index is 0.090 or less, 0.070 or less, or 0.050 or less,
wherein the glass composition comprises in percent by weight:

| | |
|---|---|
| SiO₂ | 75.0% to 87.0% |
| B₂O₃ | 8.0% to 22.0% |
| Al₂O₃ | 1.0% to 7.0% |
| BaO | 0.0% to 3.0% |
| CaO | 0.0% to 2.0% |
| K₂O | 0.0% to 3.0% |
| Na₂O | 0.0% to 3.0% |
| Li₂O | 0.0% to 1.0% |

In one embodiment, the invention relates to a glass rod having a length l_{rod}, an average semi-major axis length Iₘₐⱼₒᵣ₍ₐ₎ and an average semi-minor axis length Iₘᵢₙₒᵣ₍ₐ₎, wherein the length l_{rod} is from 100 to 1600 mm,
wherein within a cross-section of the glass rod, Iₘₐⱼₒᵣ₍ₙ₎ is the distance from the centre-of-mass of the cross-section to the furthest boundary of the glass rod within said cross-section and Iₘᵢₙₒᵣ₍ₙ₎ is the distance from the centre-of-mass of the cross-section to the nearest boundary of the glass rod within said cross-section, Iₘₐⱼₒᵣ₍ₙ₎ and Iₘᵢₙₒᵣ₍ₙ₎ can be the same or different,
wherein the glass rod comprises a glass composition having a T4 temperature, defined as the temperature at which the glass has a viscosity of 10⁴ dPa·s, of 1400 °C or more,
wherein the average semi-major axis length lₘₐⱼₒᵣ₍ₐ₎ is from 0.9 to 3.1 mm, and wherein the semi-minor axis length Iₘᵢₙₒᵣ₍ₙ₎ is from 0.9 to 3.1 mm,
wherein the semi-major axis length lₘₐⱼₒᵣ₍ₙ₎ is within a tolerance of 10%, or 5%, or 2% relative to the average semi-major axis length Iₘₐⱼₒᵣ₍ₐ₎ of the 50 equidistant cross-section positions, at each of the equidistant positions, and/or
wherein the semi-minor axis length lₘᵢₙₒᵣ₍ₙ₎ is within a tolerance of 10%, or 5%, or 2% relative to the average semi-minor axis length of the 50 equidistant cross-section positions, at each of the equidistant positions,
wherein the 50 equidistant cross-section are positioned along the length l_{rod} of the glass rod, starting at a position of 0.01*l_{rod} as a first position and employing additive increments of 0.02*l_{rod} for each subsequent position,
wherein the glass composition comprises in percent by weight:

| | |
|---|---|
| SiO₂ | 75.0% to 87.0% |
| B₂O₃ | 8.0% to 22.0% |
| Al₂O₃ | 1.0% to 7.0% |
| BaO | 0.0% to 3.0% |
| CaO | 0.0% to 2.0% |
| K₂O | 0.0% to 3.0% |
| Na₂O | 0.0% to 3.0% |
| Li₂O | 0.0% to 1.0% |

In one embodiment, the invention relates to a glass rod having a length l_{rod}, an average semi-major axis length Iₘₐⱼₒᵣ₍ₐ₎ and an average semi-minor axis length Iₘᵢₙₒᵣ₍ₐ₎, wherein the length l_{rod} is from 100 to 1600 mm,
wherein within a cross-section of the glass rod, Iₘₐⱼₒᵣ₍ₙ₎ is the distance from the centre-of-mass of the cross-section to the furthest boundary of the glass rod within said cross-section and Iₘᵢₙₒᵣ₍ₙ₎ is the distance from the centre-of-mass of the cross-section to the furthest boundary of the glass rod within said cross-section, Iₘₐⱼₒᵣ₍ₙ₎ and Iₘᵢₙₒᵣ₍ₙ₎ can be the same or different,
wherein the glass rod comprises a glass composition having a T4 temperature, defined as the temperature at which the glass has a viscosity of 10⁴ dPa·s, of 1400 °C or more,
wherein the glass rod has an average ovality defined as the average of 50 local ovalities 2*(lₘₐ₋ⱼₒᵣ₍ₙ₎ - lₘᵢₙₒᵣ₍ₙ₎)/( lₘₐⱼₒᵣ₍ₙ₎ + lₘᵢₙₒᵣ₍ₙ₎),
wherein the local ovalities are sampled at 50 equidistant positions along the glass rod, and wherein the average ovality is 0.20 or less, less than 0.10, less than 0.050, or less than 0.030, at each of the equidistant positions,
wherein the 50 equidistant cross-section are positioned along the length l_{rod} of the glass rod, starting at a position of 0.01*l_{rod} as a first position and employing additive increments of 0.02*l_{rod} for each subsequent position,
wherein the glass composition comprises in percent by weight:

| | |
|---|---|
| SiO₂ | 75.0% to 87.0% |
| B₂O₃ | 8.0% to 22.0% |
| Al₂O₃ | 1.0% to 7.0% |
| BaO | 0.0% to 3.0% |
| CaO | 0.0% to 2.0% |
| K₂O | 0.0% to 3.0% |
| Na₂O | 0.0% to 3.0% |
| Li₂O | 0.0% to 1.0% |

In one embodiment, the invention relates to a glass rod having a length l_{rod}, an average semi-major axis length Iₘₐⱼₒᵣ₍ₐ₎ and an average semi-minor axis length Iₘᵢₙₒᵣ₍ₐ₎, wherein the length l_{rod} is from 100 to 1600 mm,
wherein within a cross-section of the glass rod, Iₘₐⱼₒᵣ₍ₙ₎ is the distance from the centre-of-mass of the cross-section to the furthest boundary of the glass rod within said cross-section and Iₘᵢₙₒᵣ₍ₙ₎ is the distance from the centre-of-mass of the cross-section to the nearest boundary of the glass rod within said cross-section, Iₘₐⱼₒᵣ₍ₙ₎ and Iₘᵢₙₒᵣ₍ₙ₎ can be the same or different,
wherein the glass rod comprises a glass composition having a T4 temperature, defined as the temperature at which the glass has a viscosity of 10⁴ dPa·s, of 1400 °C or more,
having a **total relative length variation of the semi-minor axis (tlvₘᵢₙₒᵣ)** of less than 0.040, wherein tlvₘᵢₙₒᵣ determined as the absolute difference between the smallest semi-minor axis length and the largest semi-minor axis length of the 50 equidistant cross-section positions, normalised by the average value of the semi-minor axis length of the 50 equidistant cross-section positions; and/or
having a **relative total area variation (tav)** of less than 0.100, wherein tav is determined as the absolute difference between the smallest cross-sectional area at a cross-section position and the largest cross-sectional area of the 50 equidistant cross-section positions, normalised by the average value of the cross-sectional areas of the 50 equidistant cross-section positions,
wherein the 50 equidistant cross-section are positioned along the length l_{rod} of the glass rod, starting at a position of 0.01*l_{rod} as a first position and employing additive increments of 0.02*l_{rod} for each subsequent position,
wherein the glass composition comprises in percent by weight:

| | |
|---|---|
| SiO₂ | 75.0% to 87.0% |
| B₂O₃ | 8.0% to 22.0% |
| Al₂O₃ | 1.0% to 7.0% |
| BaO | 0.0% to 3.0% |
| CaO | 0.0% to 2.0% |
| K₂O | 0.0% to 3.0% |
| Na₂O | 0.0% to 3.0% |
| Li₂O | 0.0% to 1.0% |

In one embodiment, the invention relates to a glass rod having a length l_{rod}, an average semi-major axis length Iₘₐⱼₒᵣ₍ₐ₎ and an average semi-minor axis length Iₘᵢₙₒᵣ₍ₐ₎, wherein the length l_{rod} is from 100 to 1600 mm,
wherein within a cross-section of the glass rod, Iₘₐⱼₒᵣ₍ₙ₎ is the distance from the centre-of-mass of the cross-section to the furthest boundary of the glass rod within said cross-section and Iₘᵢₙₒᵣ₍ₙ₎ is the distance from the centre-of-mass of the cross-section to the nearest boundary of the glass rod within said cross-section, Iₘₐⱼₒᵣ₍ₙ₎ and Iₘᵢₙₒᵣ₍ₙ₎ can be the same or different,
wherein the glass rod comprises a glass composition having a T4 temperature, defined as the temperature at which the glass has a viscosity of 10⁴ dPa·s, of 1400 °C or more,
having a total relative length variation of the semi-major axis a relative local area variation (lav) and a quality index defined as the sum **tlvₘₐⱼₒᵣ** + lav,
wherein **tlvₘₐⱼₒᵣ** is determined as the absolute difference between (a) the smallest semi-major axis length of 50 equidistant cross-section positions and (b) the largest semi-major axis length of the 50 equidistant cross-section positions, normalised by the average value of the semi-major axis lengths lₘₐⱼₒᵣ₍ₐ₎ of the 50 equidistant cross-section positions,
wherein the 50 equidistant cross-section are positioned along the length I_{rod} of the glass rod, starting at a position of 0.01*l_{rod} as a first position and employing additive increments of 0.02*l_{rod} for each subsequent position,
wherein lav is determined as the absolute difference between (c) the cross-sectional area at the cross-section position that has the largest semi-major axis length of the 50 equidistant cross-section positions and (d) the average value of the cross-sectional areas of the 50 equidistant cross-section positions, normalised by the average value of the cross-sectional areas of the 50 equidistant cross-section positions,
wherein the **quality index** is 0.090 or less, 0.070 or less, or 0.050 or less,
wherein the average semi-major axis length Iₘₐⱼₒᵣ₍ₐ₎ is from 0.9 to 3.1 mm, and wherein the average semi-minor axis length lₘᵢₙₒᵣ₍ₐ₎ is from 0.9 to 3.1 mm,
wherein the semi-major axis lengths lₘₐⱼₒᵣ₍ₙ₎ are within a tolerance of 10%, or 5%, or 2% relative to the average semi-major axis length of the 50 equidistant cross-section positions, at each of the equidistant positions, and/or
wherein the semi-minor axis lengths Iₘᵢₙₒᵣ₍ₙ₎ are within a tolerance of 10%, or 5%, or 2% relative to the average semi-minor axis length of the 50 equidistant cross-section positions, at each of the equidistant positions,
wherein the glass composition comprises in percent by weight:

| | |
|---|---|
| SiO₂ | 70.0% to 90.0% |
| B₂O₃ | >0.0% to 25.0% |
| Al₂O₃ | >0.0% to 10.0% |
| BaO | 0.0% to 5.0% |
| CaO | 0.0% to 3.0% |
| K₂O | 0.0% to 5.0% |
| Na₂O | 0.0% to 5.0% |
| Li₂O | 0.0% to 1.0% |

In one embodiment, the invention relates to a glass rod having a length l_{rod}, an average semi-major axis length Iₘₐⱼₒᵣ₍ₐ₎ and an average semi-minor axis length Iₘᵢₙₒᵣ₍ₐ₎, wherein the length l_{rod} is from 100 to 1600 mm,
wherein within a cross-section of the glass rod, Iₘₐⱼₒᵣ₍ₙ₎ is the distance from the centre-of-mass of the cross-section to the furthest boundary of the glass rod within said cross-section and Iₘᵢₙₒᵣ₍ₙ₎ is the distance from the centre-of-mass of the cross-section to the nearest boundary of the glass rod within said cross-section, Iₘₐⱼₒᵣ₍ₙ₎ and Iₘᵢₙₒᵣ₍ₙ₎ can be the same or different,
wherein the glass rod comprises a glass composition having a T4 temperature, defined as the temperature at which the glass has a viscosity of 10⁴ dPa·s, of 1400 °C or more,
having a total relative length variation of the semi-major axis a relative local area variation (lav) and a quality index defined as the sum **tlvₘₐⱼₒᵣ** + **lav,**
wherein **tlvₘₐⱼₒᵣ** is determined as the absolute difference between (a) the smallest semi-major axis length of 50 equidistant cross-section positions and (b) the largest semi-major axis length of the 50 equidistant cross-section positions, normalised by the average value of the semi-major axis lengths lₘₐⱼₒᵣ₍ₐ₎ of the 50 equidistant cross-section positions,
wherein the 50 equidistant cross-section are positioned along the length I_{rod} of the glass rod, starting at a position of 0.01*l_{rod} as a first position and employing additive increments of 0.02*l_{rod} for each subsequent position,
wherein **lav** is determined as the absolute difference between (c) the cross-sectional area at the cross-section position that has the largest semi-major axis length of the 50 equidistant cross-section positions and (d) the average value of the cross-sectional areas of the 50 equidistant cross-section positions, normalised by the average value of the cross-sectional areas of the 50 equidistant cross-section positions,
wherein the **quality** index is 0.090 or less, 0.070 or less, or 0.050 or less,
the glass rod having an average ovality defined as the average of 50 local ovalities 2*(lₘₐⱼₒᵣ₍ₙ₎ - lₘᵢₙₒᵣ₍ₙ₎)/(lₘₐⱼₒᵣ₍ₙ₎ + lₘᵢₙₒᵣ₍ₙ₎),
wherein the local ovalities are sampled at the 50 equidistant positions along the glass rod, and wherein the average ovality is 0.20 or less, less than 0.10, less than 0.050, or less than 0.030, at each of the equidistant positions,
wherein the glass composition comprises in percent by weight:

| | |
|---|---|
| SiO₂ | 70.0% to 90.0% |
| B₂O₃ | >0.0% to 25.0% |
| Al₂O₃ | >0.0% to 10.0% |
| BaO | 0.0% to 5.0% |
| CaO | 0.0% to 3.0% |
| K₂O | 0.0% to 5.0% |
| Na₂O | 0.0% to 5.0% |
| Li₂O | 0.0% to 1.0% |

In one embodiment, the invention relates to a glass rod having a length l_{rod}, an average semi-major axis length Iₘₐⱼₒᵣ₍ₐ₎ and an average semi-minor axis length Iₘᵢₙₒᵣ₍ₐ₎, wherein the length l_{rod} is from 100 to 1600 mm,
wherein within a cross-section of the glass rod, Iₘₐⱼₒᵣ₍ₙ₎ is the distance from the centre-of-mass of the cross-section to the furthest boundary of the glass rod within said cross-section and Iₘᵢₙₒᵣ₍ₙ₎ is the distance from the centre-of-mass of the cross-section to the nearest boundary of the glass rod within said cross-section, Iₘₐⱼₒᵣ₍ₙ₎ and Iₘᵢₙₒᵣ₍ₙ₎ can be the same or different,
wherein the glass rod comprises a glass composition having a T4 temperature, defined as the temperature at which the glass has a viscosity of 10⁴ dPa·s, of 1400 °C or more,
having a total relative length variation of the semi-major axis a relative local area variation (lav) and a quality index defined as the sum **tlvₘₐⱼₒᵣ** + **lav,**
wherein **tlvₘₐⱼₒᵣ** is determined as the absolute difference between (a) the smallest semi-major axis length of 50 equidistant cross-section positions and (b) the largest semi-major axis length of the 50 equidistant cross-section positions, normalised by the average value of the semi-major axis lengths lₘₐⱼₒᵣ₍ₐ₎ of the 50 equidistant cross-section positions,
wherein the 50 equidistant cross-section are positioned along the length I_{rod} of the glass rod, starting at a position of 0.01*l_{rod} as a first position and employing additive increments of 0.02*l_{rod} for each subsequent position,
wherein lav is determined as the absolute difference between (c) the cross-sectional area at the cross-section position that has the largest semi-major axis length of the 50 equidistant cross-section positions and (d) the average value of the cross-sectional areas of the 50 equidistant cross-section positions, normalised by the average value of the cross-sectional areas of the 50 equidistant cross-section positions,
wherein the **quality index** is 0.090 or less, 0.070 or less, or 0.050 or less,
wherein the glass rod has a **total relative length variation of the semi-minor axis (tlvₘᵢₙₒᵣ)** of less than 0.040, wherein tlvₘᵢₙₒᵣ determined as the absolute difference between the smallest semi-minor axis length and the largest semi-minor axis length of the 50 equidistant cross-section positions, normalised by the average value of the semi-minor axis length of the 50 equidistant cross-section positions; and/or
has a **relative total area variation (tav)** of less than 0.100, wherein tav is determined as the absolute difference between the smallest cross-sectional area at a cross-section position and the largest cross-sectional area of the 50 equidistant cross-section positions, normalised by the average value of the cross-sectional areas of the 50 equidistant cross-section positions,
wherein the glass composition comprises in percent by weight:

| | |
|---|---|
| SiO₂ | 70.0% to 90.0% |

| | |
|---|---|
| B₂O₃ | >0.0% to 25.0% |
| Al₂O₃ | >0.0% to 10.0% |
| BaO | 0.0% to 5.0% |
| CaO | 0.0% to 3.0% |
| K₂O | 0.0% to 5.0% |
| Na₂O | 0.0% to 5.0% |
| Li₂O | 0.0% to 1.0% |

### Description of the figures

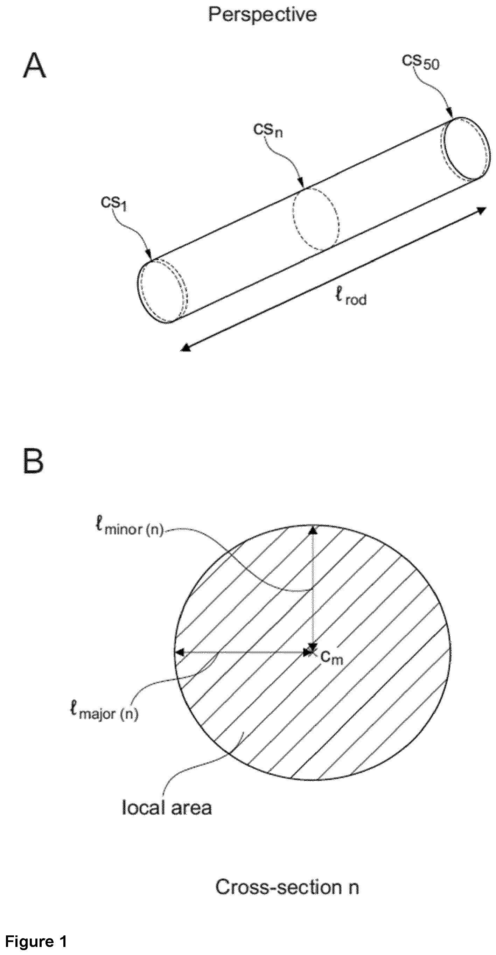

Figure 1 shows a schematic diagram of a glass rod, in perspective view (A) and a view depicting a cross-section n (B), and indicates relevant geometric characteristics. The glass rod has a certain length l_{rod} and assumes approximately a right cylinder shape with an approximate circular base. Fifty equidistant cross-sections are positioned along the length l_{rod} of the glass rod (cs₁ to cs₅₀), starting at a position of 0.01*l_{rod} as a first position (cs₁) and employing additive increments of 0.02*l_{rod} for each subsequent position (csₙ). The 50 equidistant cross-sections are parallel to the approximate circular base. Each of the 50 equidistant cross-sections csₙ has a semi-major axis length lₘₐⱼₒᵣ₍ₙ₎ and a semi-minor axis length lₘᵢₙₒᵣ₍ₙ₎, a center-of-mass cₘ and a local area. From the 50 equidistant cross-sections an average semi-major axis length Iₘₐⱼₒᵣ₍ₐ₎ and an average semi-minor axis length lₘᵢₙₒᵣ₍ₐ₎ can be calculated as, respectively, the average of the 50 semi-major axis length lₘₐⱼₒᵣ₍ₙ₎ values and the average of the 50 semi-minor axis length lₘᵢₙₒᵣ₍ₙ₎ values.

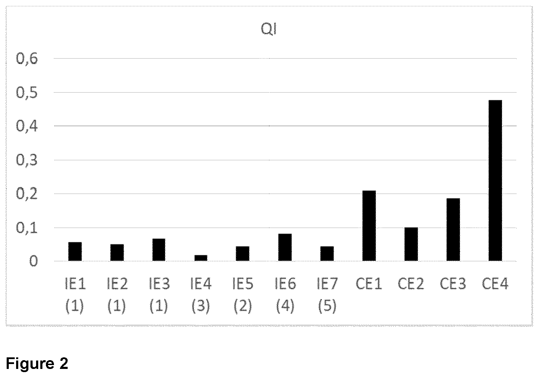

Figure 2 shows the quality index for glass rods according to the invention (Inventive Examples 1 to 7, IE1 to IE7) compared to glass rods according to the state of the art (Comparative Examples 1 to 4, CE1 to CE4). The glass composition used in the Inventive Examples is indicated in brackets.

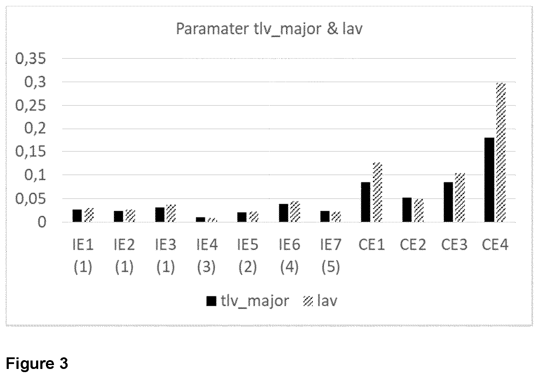

Figure 3 shows the parameters tlv_major and lav for glass rods according to the invention (Inventive Examples 1 to 7, IE1 to IE7) compared to glass rods according to the state of the art (Comparative Examples 1 to 4, CE1 to CE4). The glass composition used in the Inventive Examples is indicated in brackets.

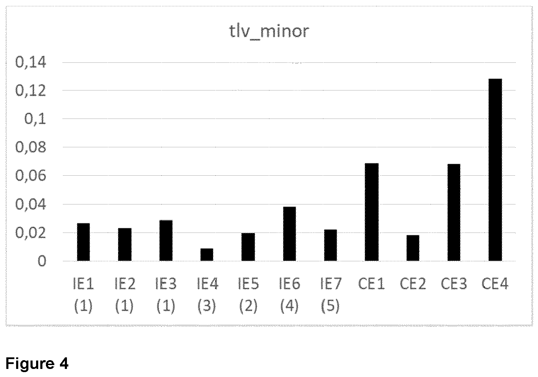

Figure 4 shows the parameter tlv_minor for glass rods according to the invention (Inventive Examples 1 to 7, IE1 to IE7) compared to glass rods according to the state of the art (Comparative Examples 1 to 4, CE1 to CE4). The glass composition used in the Inventive Examples is indicated in brackets.

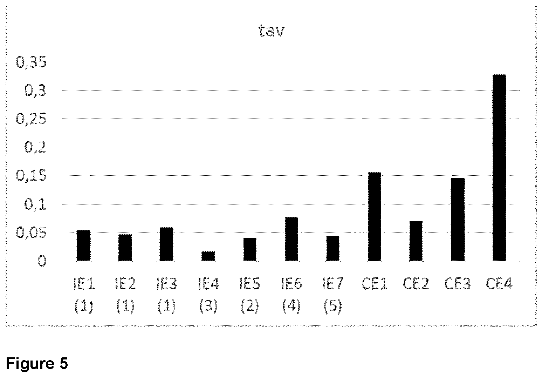

Figure 5 shows the parameter tav for glass rods according to the invention (Inventive Examples 1 to 7, IE1 to IE7) compared to glass rods according to the state of the art (Comparative Examples 1 to 4, CE1 to CE4). The glass composition used in the Inventive Examples is indicated in brackets.

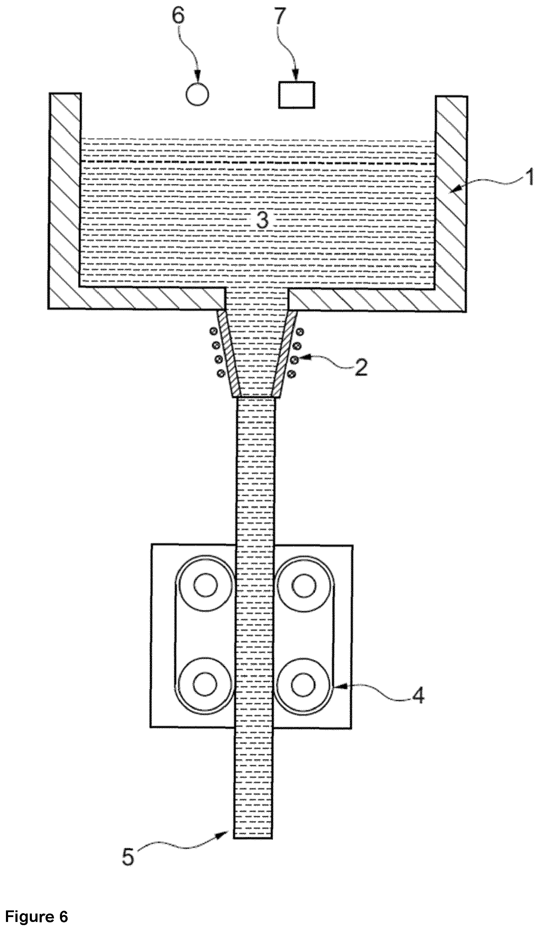

Figure 6 shows a depiction of the process and reactor according to the invention. The reactor (1) has a lower drain opening (2). Glass raw material is heated in the reactor (1) to obtain a glass melt (3). Conveyor means (4) assist in the drawing of the glass rods (5) downstream of the reactor, i.e. after the glass melt (3) has left the reactor (1) through the lower drain opening (2). The lower drain opening (2) is heated independently (heating for example by electromagnetic coils indicated as circles) to ensure a constant and inform glass flow. The lower drain opening (2) may be a nozzle or a duct. The withdrawal temperature of the glass melt (3) is measured with an IR pyrometer (6). The pressure above the glass melt is measured with a pressure sensor (7).

### Examples

### Measurement of geometric properties

Comparative glass rods and glass according to the invention have been measured with a sliding calliper to characterise their geometric properties, such as the largest diameter measurable within a cross-section and the smallest diameter measurable within a cross-section. The uncertainty of the measurement was about 50 µm.

4 comparative glass rods of 30 cm length were measured at distances of 5 mm. Glass rods according to the invention with a length of 100 cm were measured at distances of 2 cm. The graphical analysis further yielded the ovality and the cross-section area, for each cross-section over the length of, respectively, 30 cm and 100 cm.

### Glass compositions

Glass rods according to the invention were manufactured from five different glass compositions, having, respectively, a coefficient of thermal expansion of 1.25, 1.60, 1.90, 2.65 and 3.05 ppm/K.

| **wt.%** | **1** | **2** | **3** | **4** | **5** |
|---|---|---|---|---|---|
| SiO₂ | 85.0 | 82.0 | 81.0 | 79.0 | 78.5 |
| B₂O₃ | 10.0 | 11.0 | 11.0 | 11.0 | 10.5 |
| Al₂O₃ | 4.5 | 5.0 | 5.0 | 5.0 | 5.0 |
| BaO | 0.5 | 1.5 | 2.0 | 2.0 | 2.0 |
| CaO | - | 0.5 | 1.0 | 1.0 | 1.0 |
| K₂O | - | | <0.5 | 2.0 | 3.0 |
| Na₂O | | | | | |
| Li₂O | | | | | |
| Fe₂O₃ | < 0.1 | <0.1 | <0.1 | <0.1 | <0.1 |

### Manufacture of glass rods

For the manufacture of glass rods, a small-scale, high-temperature gas-fired glass tank furnace was used, as described in the Journal of the Society of Glass Technology 28, 1944, pages 105-112. The tank furnace has internal dimensions of 21 inches long, 12 inches wide and 13 inches high. The glass depth at the beginning of manufacture is about 4 to 5 inches. The lining of the furnace was built of blocks moulded from a mixture of zircon sand and zirconia, using starch paste as a temporary bond. The withdrawal temperature of the glass melt was measured above the glass melt in the center of the reactor by an IR pyrometer which monitors the glass surface via IR radiation. The pressure above the glass melt was measured by a pressure sensor. During manufacture, the drawn glass rods were measured, i.e. the outer diameter and their local area. The rate or volume flow rate of withdrawal of the glass melt was continuously monitored. During manufacture, the glass melt temperature and the pressure were manually adjusted to ensure a constant and uniform glass flow. Before the start of withdrawal, the glass melt was heated at least partially to a temperature of T2.5, and then increased in increments of 1 °C. The temperature increase during withdrawal was maximally 50 °C, and was typically about 30 °C. The manufacturing temperature was controlled and adjusted both in the reactor and at the lower drain opening. Alternatively or additionally, the pressure in the furnace, i.e. above the glass melt, was adjusted to account for the lower pressure at the drain opening head resulting from the lowered level of the glass melt during withdrawal. The manufacture was typically run over a time course of 4 hours.

## Claims

1. Glass rod having a length l_{rod}, an average semi-major axis length Iₘₐⱼₒᵣ₍ₐ₎ and an average semi-minor axis length lₘᵢₙₒᵣ₍ₐ₎, wherein the length l_{rod} is from 100 to 1600 mm,
wherein within a cross-section of the glass rod, Iₘₐⱼₒᵣ₍ₙ₎ is the distance from the centre-of-mass of the cross-section to the furthest boundary of the glass rod within said cross-section and Iₘᵢₙₒᵣ₍ₙ₎ is the distance from the centre-of-mass of the cross-section to the nearest boundary of the glass rod within said cross-section, Iₘₐⱼₒᵣ₍ₙ₎ and Iₘᵢₙₒᵣ₍ₙ₎ can be the same or different,
wherein the glass rod comprises a glass composition having a T4 temperature, defined as the temperature at which the glass has a viscosity of 10⁴ dPa·s, of 1400 °C or more,
the glass rod having a total relative length variation of the semi-major axis a relative local area variation **(lav)** and a quality index defined as the sum **tlvₘₐⱼₒᵣ** + **lav,**
wherein **tlvₘₐⱼₒᵣ** is determined as the absolute difference between (a) the smallest semi-major axis length Iₘₐⱼₒᵣ₍ₙ₎ of 50 equidistant cross-section positions and (b) the largest semi-major axis length Iₘₐⱼₒᵣ₍ₙ₎ of the 50 equidistant cross-section positions, normalised by the average value of the semi-major axis lengths lₘₐⱼₒᵣ₍ₐ₎ of the 50 equidistant cross-section positions,
wherein the 50 equidistant cross-sections are positioned along the length I_{rod} of the glass rod, starting at a position of 0.01*l_{rod} as a first position and employing additive increments of 0.02*l_{rod} for each subsequent position,
wherein lav is determined as the absolute difference between (c) the cross-sectional area at the cross-section position that has the largest semi-major axis length of the 50 equidistant cross-section positions and (d) the average value of the cross-sectional areas of the 50 equidistant cross-section positions, normalised by the average value of the cross-sectional areas of the 50 equidistant cross-section positions,
wherein the **quality index** is 0.090 or less, 0.070 or less, or 0.050 or less.

2. Glass rod according to claim 1, wherein the average semi-major axis length lₘₐⱼₒᵣ₍ₐ₎ is from 0.9 to 3.1 mm, and wherein the average semi-minor axis length lₘᵢₙₒᵣ₍ₐ₎ is from 0.9 to 3.1 mm,
wherein the semi-major axis lengths lₘₐⱼₒᵣ₍ₙ₎ are within a tolerance of 10%, or 5%, or 2% relative to the average semi-major axis length of the 50 equidistant cross-section positions, at each of the equidistant positions, and/or
wherein the semi-minor axis lengths Iₘᵢₙₒᵣ₍ₙ₎ are within a tolerance of 10%, or 5%, or 2% relative to the average semi-minor axis length of the 50 equidistant cross-section positions, at each of the equidistant positions.

3. Glass rod according to any one of the preceding claims, wherein a bow or curvature is between 0.030 and 0.30 mm, measured according to DIN EN ISO 1101:2017-09 and at a support distance of 300 mm.

4. Glass rod according to any one of the preceding claims, having an average ovality defined as the average of 50 local ovalities 2*(lₘₐⱼₒᵣ₍ₙ₎ - lₘᵢₙₒᵣ₍ₙ₎)/(lₘₐⱼₒᵣ₍ₙ₎ + lₘᵢₙₒᵣ₍ₙ₎),
wherein the local ovalities are sampled at the 50 equidistant positions along the glass rod, and wherein the average ovality is 0.20 or less, less than 0.10, less than 0.050, or less than 0.030, at each of the equidistant positions.

5. Glass rod according to any one of the preceding claims, having a **total relative length variation of the semi-minor axis (tlvₘᵢₙₒᵣ)** of less than 0.040, wherein tlvₘᵢₙₒᵣ determined as the absolute difference between the smallest semi-minor axis length and the largest semi-minor axis length of the 50 equidistant cross-section positions, normalised by the average value of the semi-minor axis length of the 50 equidistant cross-section positions; and/or
having a **relative total area variation (tav)** of less than 0.100, wherein tav is determined as the absolute difference between the smallest cross-sectional area at a cross-section position and the largest cross-sectional area of the 50 equidistant cross-section positions, normalised by the average value of the cross-sectional areas of the 50 equidistant cross-section positions.

6. Glass rod according to any one of the preceding claims, **characterised by** one or more of the following properties:
- the number of bubbles in the glass rod is less than 10, less than 5, or less than 2, wherein the length of a bubble is at least 0.5 mm measured as the largest linear distance in the bubble;
- the length of a bubble, measured as the largest linear distance in the bubble, is less than 70 mm, less than 50 mm, or less than 10 mm; and
- an absence of a stretch of bubbles of more than 100 mm, wherein the stretch of bubbles is defined as the occurrence of a sequence of bubbles disposed one after the other in glass rod length direction, the bubbles having a distance between two neighbouring bubbles which is less than the length of the bubble with the largest length in the sequence.

7. Glass rod according to any one of the preceding claims, wherein the glass composition comprises one or more or all of the following constituents in percent by weight:
- 70.0% to 90.0% of SiO₂,
- 0.0% to 25.0% of B₂O₃,
- 0.0% to 10.0% of Al₂O₃,
- 0.0% to 10.0% of one or more alkali earth metal oxides,
- 0.0% to 7.0% of one or more alkali metal oxides.

8. A set of glass rods, comprising at least 40 glass rods according to any one of the preceding claims.

9. Set of glass rods according to claim 8, wherein at least 80% of the glass rods have one or more of the following properties:
- absence of bubbles, defined as fully enclosed longitudinal voids within the glass rod, preferably formed by gas inclusions in the glass, whereby the gas can be gaseous at 20 °C and/or can condense after cooling and a bubble with reduced pressure is formed, having a diameter of 0.15 mm or less at the largest extension of the longitudinal void in a cross-sectional direction of the glass rod, and having a length of 50 mm or less along the largest extension of the glass rod;
- essential absence of open bubbles, wherein the length of a bubble is at least 0.5 mm measured as the largest linear distance in the bubble; and
- absence of inclusions, defined as foreign material fully enclosed in the glass rod having a size of 100 µm or more, preferably metallic particle inclusions and/or non-metallic particle inclusions.

10. Process for the production of a glass rod, optionally a glass rod or a set of glass rods according to one or more of the previous claims, comprising the steps
- providing a reactor (1) comprising a lower drain opening (2);
- heating glass raw material in the reactor to obtain a glass melt (3);
- heating the glass melt at least partially to a temperature T2.5, defined as the temperature at which the glass melt has a viscosity of 10^{2,5} dPa·s;
- withdrawing the glass melt from the reactor at a withdrawal temperature and at a glass melt withdrawal rate; and
- increasing the withdrawal temperature in order to control the glass melt withdrawal rate, and/or adjusting a pressure above the glass melt to control the glass melt withdrawal rate;
- cooling and/or forming the glass melt to obtain a glass rod (5) and/or obtaining the glass rod (5) according to any one of claims 1 to 7,
wherein the glass melt has a glass composition with a T4 temperature of 1400 °C or more, wherein T4 is the temperature at which the glass melt composition has a viscosity of 10⁴ dPa·s.

11. Process according to claim 10, wherein one or more of the following conditions is fulfilled:
- the glass melt (3) is withdrawn at a withdrawal temperature of at least 50 °C above T4, preferably between 50 to 130 °C above T4, with a tolerance of 10 °C, or 5 °C, or 3° C, wherein preferably glass melt withdrawal from the reactor (1) is performed via the drain opening (2);
- increasing the withdrawal temperature in order to control the glass melt withdrawal rate with a tolerance of 2% or less, or 1% or less; and
- adjusting a pressure above the glass melt to control the glass melt withdrawal rate with a tolerance of 2% or less, or 1% or less.

12. Process according to claim 10 or claim 11, wherein the withdrawal of the glass melt from the reactor (1) is at a rate of 2 to 50 m min⁻¹ with respect to the length of the glass rod (5) emanating from the lower drain opening (2) and/or withdrawing the glass melt (3) from the reactor (1) at a volume flow rate of 15 to 150 ml min⁻¹.

13. Process according to any one of claims 10 to 12, further comprising the step of
- discontinuing the withdrawal of the glass melt (3) from the reactor (1), which is preferably operated as a batch reactor, before a consumption of the glass melt of 90% is reached, or 80%, or 70%, or 60%, or 50%.

14. Process according to any one of claims 10 to 12, further comprising the steps of
- continuing the withdrawal of the glass melt (3) from the reactor (1), which is preferably operated as a batch reactor, once a consumption of the glass melt of 90% is reached; and
- heating a melt surface,
wherein heating the melt surface provides for maintaining the glass melt withdrawal from the reactor (1) at a rate with a tolerance of 1 % or less and/or at a volume flow rate with a tolerance of 1% or less.

15. Process according to any one of claims 10 to 14, wherein the adjusting a pressure above the glass melt includes one or more of the following means:
- hermetic seal of the reactor; and
- employing pressurised air to compensate for the pressure decay at the lower drain opening.

16. Process according to any one of claims 10 to 15, wherein the process is conducted under exclusive heating by electric means, in order to eliminate emission gases, such as e.g. CO₂, and/or wherein a contact surface of the reactor, with which the glass melt is in contact, comprises 30 wt.% or more contact material in the form of a cast zirconia material comprising more than 70 wt.% Zr0₂ and/or a contact surface of the reactor, with which the glass melt is in contact, comprises sintered material with more than 80 wt.%, more than 90 wt.%, or more than 95 wt.% zirconium silicate.

17. Process or glass rod according to any one of the preceding claims, wherein the glass has a water content of at least 35 mmol/l, preferably at least 45 mmol/l, more preferably at least 55 mmol/l, and/or wherein the glass has a coefficient of thermal expansion in the temperature range from 20 °C to 300 °C of 0.8 ppm/K to 4.5 ppm/K.

18. Flash lamp comprising the glass rod according to any one of claims 1 to 7, the flash lamp further comprising a tungsten or molybdenum electrode, and quartz glass, wherein the glass seals the quartz glass to the tungsten or molybdenum electrode.

19. Use of a glass rod according to at least one of claims 1 to 7 for joining a metal article to a glass element and/or for a flash lamp.
